# EUROPEAN PATENT SPECIFICATION

(11) **EP 3 878 670 B1**
(45) Date of publication and mention of the grant of the patent: **02.08.2023**
(21) Application number: 21161197.5
(22) Date of filing: 08.03.2021
(51) Int. Cl.: B60H 3/00, B60H 1/32, B60H 1/00, B60H 1/03, F01N 5/02, F01P 3/20

(54) **IN-VEHICLE TEMPERATURE CONTROL SYSTEM**
FAHRZEUGTEMPERATURREGELSYSTEM
SYSTÈME DE COMMANDE DE TEMPÉRATURE À L'INTÉRIEUR D'UN VÉHICULE

(30) Priority: 10.03.2020 JP 2020041158
(43) Date of publication of application: 15.09.2021
(73) Proprietor: TOYOTA JIDOSHA KABUSHIKI KAISHA, Toyota-shi Aichi 471-8571 (JP)
(72) Inventor: MIYOSHI, Yuji, Toyota-shi, Aichi 471-8571 (JP)
(74) Representative: TBK

(56) References cited:
- FR-A1- 3 085 068
- GB-A- 2 575 546
- US-A- 3 309 020
- US-A- 5 497 941
- US-A1- 2018 208 019
- US-A1- 2018 272 839
- US-A1- 2018 339 574
- US-B1- 6 213 233

## Description

### 1. Field of the Invention

The present invention relates to an in-vehicle temperature control system as defined in claim 1.

### 2. Description of Related Art

There is known an in-vehicle temperature control system using a heater core provided in a thermal circuit of a vehicle for heating the vehicle cabin. In particular, in such an in-vehicle temperature control system, it is known that the heat medium flowing into the heater core is heated by the exhaust heat of the internal combustion engine and the heat released from the condenser of the refrigeration circuit provided separately from the internal combustion engine (for example, document JP 2009-180103 A).
Document US 2018/0339574 A1 discloses a temperature control system where an engine cooling circuit bypass is provided and serves to avoid a thermal circuit comprising a heater core and an EGR cooler until an engine coolant temperature is sufficiently high for the engine operation. Upon cold starting an engine, a thermal circuit is switched to guide a coolant heated by the still cold engine via a bypass back to the engine. In a second circuit a coolant at a certain minimum temperature is led from a condenser to a heat core supplying a passenger compartment with heat and an EGR cooler. Thus, via the heat supplied to the EGR cooler, heating up of the engine is improved.
Document US 5 497 941 A discloses a system for controlling the temperature of the air in a cabin for an engine-electric motor hybrid car. Here, a circuit supplying a coolant heated by an engine comprises an individual heating core to supply heat into a vehicle cabin. In addition, a heat exchanger being part of an air condition system can be supplied to heat the vehicle cabin.
A connection possibility between the two circuits is not provided
Document US 2018/0272839 A1 discloses a vehicular heat management device. Here, upon cold starting an engine, a cooling circuit is formed from an engine to a bypass. A second cooling circuit is formed from condenser to a heater core for heating a cabin

### SUMMARY OF THE INVENTION

The design of the vehicle may require to mount the internal combustion engine and the heater core with a distance therebetween. This elongates the pipe for the heat medium disposed between the internal combustion engine and the heater core. Thus, when the heat medium heated by the internal combustion engine is to flow through the heater core, the cold heat medium remaining in the pipe first flows into the heater core. As a result, the heating capacity of the heater core at this time is low.

In particular, when the heat medium flowing into the heater core can be heated by the heat released from the condenser of the refrigeration circuit, the high temperature heat medium can be supplied from the condenser to the heater core before the heat medium is heated by the internal combustion engine. Thus, even though the high temperature heat medium has been supplied to the heater core to be used for heating before the heat medium heated by the internal combustion engine is used, when the use of the heat medium flowing from the internal combustion engine is started, a cold heat medium flows into the heater core temporarily. As a result, the heating capacity temporarily decreases.

In view of the above issues, the object of the present invention is to suppress the heating capacity of the heater core from decreasing due to the heat medium, which remains in the heat medium pipe between the internal combustion engine and the heater core, flowing through the heater core.

The object of the invention is achieved by an in-vehicle temperature control system as defined in claim 1. Advantageous embodiments are carried out according to the dependent claims.

The invention relates to an in-vehicle temperature control system including: a heater core used to heat an inside of a vehicle cabin using heat of a heat medium; a first heating unit that heats the heat medium using exhaust heat of an internal combustion engine; a thermal circuit configured to circulate the heat medium between the heater core and the first heating unit; a distribution state switching mechanism that switches a distribution state of the heat medium between a first distribution state and a second distribution state; and a control device that controls the distribution state switching mechanism, wherein: the thermal circuit includes a bypass flow path disposed in parallel with the heater core with respect to the first heating unit; in the first distribution state, the heat medium heated by the first heating unit flows through the heater core without passing through the bypass flow path; in the second distribution state, the heat medium heated by the first heating unit flows through the bypass flow path without passing through the heater core; and the first heating unit is disposed on a first side of the vehicle cabin in a front-rear direction of a vehicle, and the heater core and the bypass flow path are disposed on a second side that is opposite to the first side of the vehicle cabin in the front-rear direction of the vehicle.

Preferably, the first side of the vehicle cabin may be further rearward of the vehicle cabin, and the second side of the vehicle cabin may be further frontward of the vehicle cabin.

The control device may control the distribution state switching mechanism so as to switch a distribution state of the heat medium in an order of the second distribution state and the first distribution state when heating of the vehicle cabin is requested.

According to the invention, the in-vehicle temperature control system further includes a second heating unit that heats the heat medium using heat other than the exhaust heat of the internal combustion engine, wherein: the distribution state switching mechanism switches the distribution state of the heat medium between the first distribution state, the second distribution state, and a third distribution state; in the third distribution state, the heat medium does not flow into the heater core nor the bypass flow path from the first heating unit and the heat medium heated by the second heating unit flows through the heater core; and the second heating unit is disposed on the second side of the vehicle cabin.

According to the invention, in the thermal circuit, when the distribution state switching mechanism is in the second distribution state, the heat medium heated by the second heating unit flows through the heater core.

According to the invention, the thermal circuit includes an engine thermal circuit configured to allow at least a part of the heat medium flowing out from the first heating unit to flow into the first heating unit again without flowing through the heater core nor the bypass flow path; the engine thermal circuit is disposed on the first side of the vehicle cabin of the vehicle; and in the third distribution state, the heat medium heated by the first heating unit circulates only in the engine thermal circuit.

According to the invention, the control device is configured to control the distribution state switching mechanism so as to switch the distribution state of the heat medium in an order of the third distribution state, the second distribution state, and the first distribution state when heating of the vehicle cabin is requested.

Preferably, the in-vehicle temperature control system may further include a refrigeration circuit, wherein the second heating unit may heat the heat medium using heat of a condenser of the refrigeration circuit.

Preferably, the thermal circuit may include a first thermal circuit and a second thermal circuit; the first thermal circuit may allow the heat medium to circulate between the first heating unit and the heater core; the second thermal circuit may allow the heat medium to circulate between the second heating unit and the heater core; and the first thermal circuit may include the bypass flow path.

Preferably, the second thermal circuit may include a radiator provided in parallel with the heater core with respect to the second heating unit; and the second thermal circuit may be configured to adjust a flow rate of the heat medium flowing through the heater core and the radiator.

According to the present invention, the heating capacity of the heater core is suppressed from decreasing due to the heat medium, which remains in the heat medium pipe between the internal combustion engine and the heater core, flowing through the heater core.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram showing a schematic configuration of a vehicle equipped with an in-vehicle temperature control system according to an embodiment;
FIG. 2 is a diagram showing a schematic configuration of another vehicle equipped with the in-vehicle temperature control system according to the embodiment;
FIG. 3 is a configuration diagram schematically showing the in-vehicle temperature control system according to the embodiment;
FIG. 4 is a configuration diagram schematically showing an air passage for air conditioning of the vehicle equipped with the in-vehicle temperature control system;
FIG. 5 shows a distribution state (first stop mode) of a heat medium in the in-vehicle temperature control system when neither cooling nor heating of a vehicle cabin is requested and cooling of a heat generating device such as a battery is required;
FIG. 6 shows a distribution state (second stop mode) of the heat medium in the in-vehicle temperature control system when neither cooling nor heating of the vehicle cabin is requested and rapid cooling of the heat generating device is required;
FIG. 7 shows a distribution state (first cooling mode) of the heat medium in the in-vehicle temperature control system when cooling of the vehicle cabin is requested and cooling of the heat generating device is required;
FIG. 8 shows a distribution state (second cooling mode) of the heat medium in the in-vehicle temperature control system when cooling of the vehicle cabin is requested and rapid cooling of the heat generating device is required;
FIG. 9 shows a distribution state (first heating mode) of the heat medium in the in-vehicle temperature control system when heating of the vehicle cabin is requested and an internal combustion engine is operated;
FIG. 10 shows a distribution state (fourth heating mode) of the heat medium in the in-vehicle temperature control system when heating of the vehicle cabin is requested and the internal combustion engine is stopped;
FIG. 11 shows a distribution state (third heating mode) of the heat medium in the in-vehicle temperature control system during the cold start of the internal combustion engine;
FIG. 12 shows a distribution state (second heating mode) of the heat medium in the in-vehicle temperature control system during the cold start of the internal combustion engine;
FIG. 13 is a time chart showing changes in various parameters when the internal combustion engine is cold-started in a state where heating of the vehicle cabin is requested;
FIG. 14 is a flowchart of a control routine that controls the distribution state of the heat medium in the in-vehicle temperature control system; and
FIG. 15 is a flowchart showing a control routine for heating control executed in step S12 of FIG 14.

### DETAILED DESCRIPTION OF EMBODIMENTS

An embodiment of the present invention will be described in detail below with reference to the drawings. In the following description, similar components are given the same reference characters.

### Vehicle Configuration

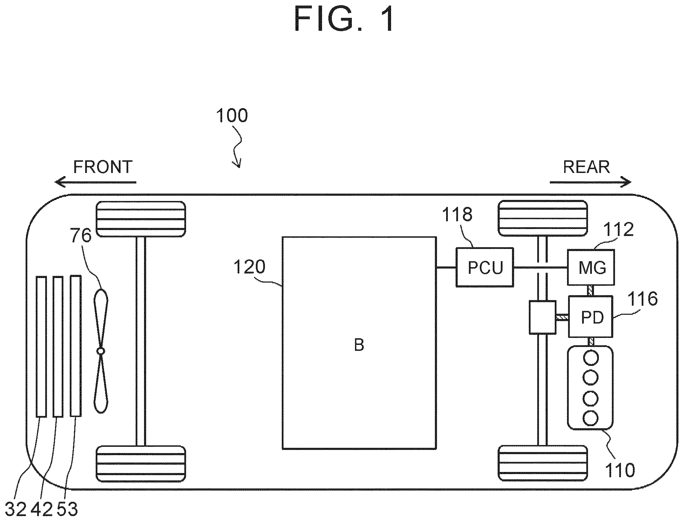

FIG. 1 is a diagram showing a schematic configuration of a vehicle 100 equipped with an in-vehicle temperature control system 1 according to an embodiment. In FIG. 1, the left side shows the front of the vehicle 100, and the right side shows the rear of the vehicle 100. As shown in FIG. 1, the vehicle 100 includes an internal combustion engine 110, a motor generator (MG) 112, and a power split device 116. In addition, the vehicle 100 includes a power control unit (PCU) 118 electrically connected to the MG 112 and a battery 120 electrically connected to the PCU 118.

The internal combustion engine 110 is a prime mover that burns fuel inside the engine and converts the thermal energy of the combustion gas into mechanical energy. The internal combustion engine 110 is connected to the power split device 116, and the output of the internal combustion engine 110 is used to drive the vehicle 100 or generate electric power using the MG 112.

The MG 112 functions as an electric motor and a power generator. The MG 112 is connected to the power split device 116 and is used to drive the vehicle 100 and to regenerate power when braking the vehicle 100. In the present embodiment, the MG 112 having a power generation function is used as the motor for driving the vehicle 100, but a motor having no power generation function may be used instead.

The PCU 118 is connected between the battery 120 and the MG 112 to control the electric power supplied to the MG 112. The PCU 118 includes heat generating components such as an inverter for driving a motor, a boost converter for controlling a voltage, and a direct current-to-direct current (DC-DC) converter for stepping down a high voltage. The battery 120 is connected to the PCU 118 and the MG 112 to supply the MG 112 with electric power for driving the vehicle 100.

In the present embodiment, the internal combustion engine 110, the MG 112, and the PCU 118 are disposed in the rear portion of the vehicle 100, that is, further rearward of the vehicle cabin. On the other hand, the battery 120 is disposed in the center of the vehicle 100, that is, below the vehicle cabin.

The vehicle 100 may be any type of vehicle as long as it includes an internal combustion engine 110 and an MG (or motor) 112. Therefore, for example, the vehicle 100 may be configured such that the internal combustion engine is used only for power generation and only the motor drives the vehicle 100.

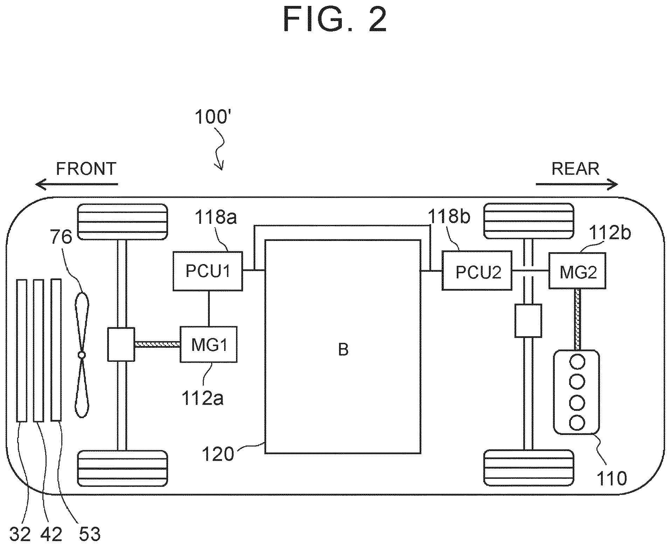

As a specific configuration in which the internal combustion engine is used only for power generation and only the motor drives the vehicle 100, for example, a vehicle 100' shown in FIG. 2 can be applied. As shown in FIG. 2, the vehicle 100 includes the internal combustion engine 110, two MGs 112a and 112b, two PCUs 118a and 118b, and the battery 120.

The second MG 112b is driven by the driving force of the internal combustion engine 110 to generate electric power. The electric power generated by the second MG 112b is supplied to the battery 120 and stored in the battery 120, or is supplied to the first MG 112a. Electric power is supplied to the first MG 112a from the battery 120 or the second MG 112b to drive the vehicle 100. The first MG 112a is used as a power generator when generating electric power by regeneration, and the second MG 112b is used as an electric motor (motor) when starting the internal combustion engine 110.

### Configuration of In-Vehicle Temperature Control System

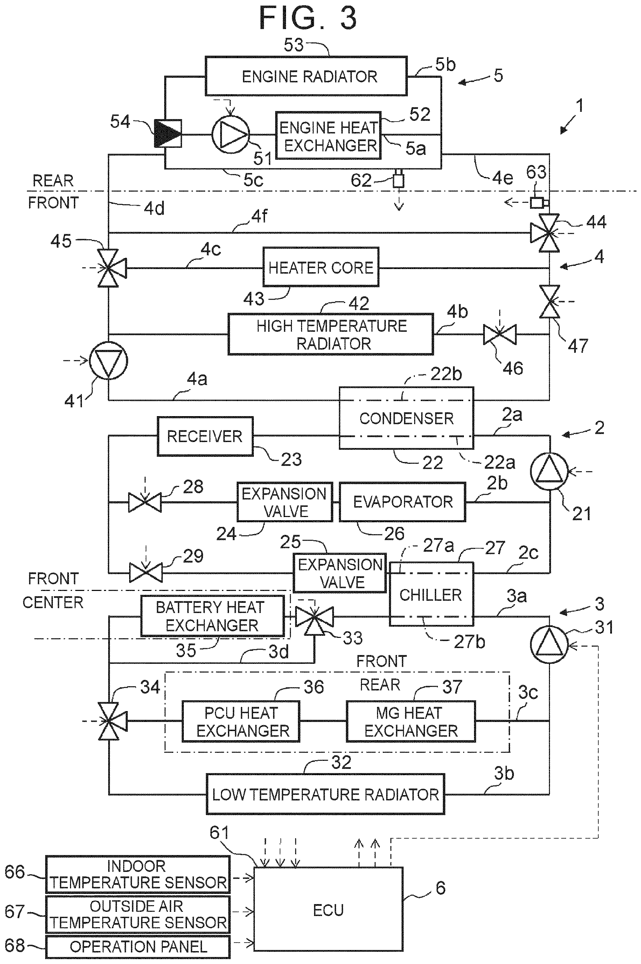

The configuration of the in-vehicle temperature control system 1 according to the embodiment will be described with reference to FIGS. 1 to 4. FIG. 3 is a configuration diagram schematically showing the in-vehicle temperature control system 1. The in-vehicle temperature control system 1 includes a refrigeration circuit 2, a low temperature circuit 3, a high temperature circuit 4, and a control device 6. The refrigeration circuit 2, the low temperature circuit 3, and the high temperature circuit 4 function as thermal circuits that exchange heat with the outside of the circuit. Refrigeration Circuit

First, the refrigeration circuit 2 will be described. The refrigeration circuit 2 includes a compressor 21, a refrigerant pipe 22a of a condenser 22, a receiver 23, a first expansion valve 24, a second expansion valve 25, an evaporator 26, a refrigerant pipe 27a of a chiller 27, a first electromagnetic regulating valve 28, and a second electromagnetic regulating valve 29. The refrigeration circuit 2 is configured to realize a refrigeration cycle by circulating a refrigerant through these components. As the refrigerant, any substance generally used as a refrigerant in the refrigeration cycle, such as hydrofluorocarbon (for example, HFC-134a), is used.

The refrigeration circuit 2 is divided into a basic refrigeration flow path 2a, an evaporator flow path 2b, and a chiller flow path 2c. The evaporator flow path 2b and the chiller flow path 2c are provided in parallel with each other and are connected to the basic refrigeration flow path 2a.

In the basic refrigeration flow path 2a, the compressor 21, the refrigerant pipe 22a of the condenser 22, and the receiver 23 are provided in this order in the circulation direction of the refrigerant. In the evaporator flow path 2b, the first electromagnetic regulating valve 28, the first expansion valve 24, and the evaporator 26 are provided in this order in the circulation direction of the refrigerant. In addition, in the chiller flow path 2c, the second electromagnetic regulating valve 29, the second expansion valve 25, and the refrigerant pipe 27a of the chiller 27 are provided in this order.

The compressor 21 functions as a compressor that compresses the refrigerant. In the present embodiment, the compressor 21 is an electric compressor, and is configured such that its discharge capacity can be changed seamlessly by adjusting the electric power supplied to the compressor 21. In the compressor 21, the low-temperature, low-pressure, mainly gaseous refrigerant flowing out from the evaporator 26 or the chiller 27 can be changed to a high-temperature, high-pressure, mainly gaseous refrigerant by being adiabatically compressed.

The condenser 22 includes the refrigerant pipe 22a and a coolant pipe 22b. The condenser 22 functions as a heat exchanger that discharges heat from the refrigerant to the coolant flowing through the coolant pipe 22b of the high temperature circuit 4 described later to condense the refrigerant. From a different point of view, the condenser 22 functions as a second heating unit that heats the coolant of the high temperature circuit 4 using heat other than the exhaust heat of the internal combustion engine 110. The refrigerant pipe 22a of the condenser 22 functions as a condenser that condenses the refrigerant in the refrigeration cycle. Further, in the refrigerant pipe 22a of the condenser 22, the high-temperature, high-pressure, mainly gaseous refrigerant flowing out from the compressor 21 can be changed to a high-temperature, high-pressure, mainly liquid refrigerant by being cooled isobarically.

The receiver 23 stores the refrigerant condensed by the refrigerant pipe 22a of the condenser 22. Further, since the condenser 22 cannot necessarily liquefy all the refrigerant, the receiver 23 is configured to separate gas and liquid. Only the liquid refrigerant from which the gaseous refrigerant is separated flows out from the receiver 23.

The first expansion valve 24 and the second expansion valve 25 function as expanders for expanding the refrigerant. Each of the expansion valves 24 and 25 is provided with a passage having a small diameter, and by spraying the refrigerant from the passage having a small diameter, the pressure of the refrigerant is sharply reduced. The first expansion valve 24 sprays the liquid refrigerant supplied from the receiver 23 into the evaporator 26 in the form of mist. Similarly, the second expansion valve 25 sprays the liquid refrigerant supplied from the receiver 23 into the refrigerant pipe 27a of the chiller 27 in the form of mist. In these expansion valves 24 and 25, the high-temperature, high-pressure, liquid refrigerant flowing out from the receiver 23 can be changed to a low-temperature, low-pressure, mist-like refrigerant by being depressurized and partially gasified.

The evaporator 26 functions as an evaporator that evaporates the refrigerant. Specifically, the evaporator 26 causes the refrigerant to absorb heat from the air around the evaporator 26 to evaporate the refrigerant. Thus, in the evaporator 26, the low-temperature, low-pressure, mist-like refrigerant flowing out from the first expansion valve 24 can be changed to a low-temperature, low-pressure, gaseous refrigerant by evaporating. As a result, the air around the evaporator 26 is cooled, and the vehicle cabin can be cooled.

The chiller 27 includes the refrigerant pipe 27a and a coolant pipe 27b. The chiller 27 functions as a heat exchanger that causes the refrigerant to absorb heat from the coolant flowing through the coolant pipe 27b of the low temperature circuit 3 described later and evaporates the refrigerant. The refrigerant pipe 27a of the chiller 27 functions as an evaporator that evaporates the refrigerant. Thus, in the refrigerant pipe 27a of the chiller 27, the low-temperature, low-pressure, mist-like refrigerant flowing out from the second expansion valve 25 can be changed to a low-temperature, low-pressure, gaseous refrigerant by evaporating. As a result, the coolant of the low temperature circuit 3 can be cooled.

The first electromagnetic regulating valve 28 and the second electromagnetic regulating valve 29 are used to change the distribution mode of the refrigerant in the refrigeration circuit 2. As the opening degree of the first electromagnetic regulating valve 28 increases, the amount of the refrigerant flowing into the evaporator flow path 2b increases, and thus the amount of the refrigerant flowing into the evaporator 26 increases. Further, as the opening degree of the second electromagnetic regulating valve 29 increases, the amount of the refrigerant flowing into the chiller flow path 2c increases, and thus the amount of the refrigerant flowing into the chiller 27 increases. Any valve may be provided in place of the electromagnetic regulating valves 28 and 29 as long as the flow rates flowing from the basic refrigeration flow path 2a into the evaporator flow path 2b and the chiller flow path 2c can be adjusted.

As shown in FIG. 3, in the present embodiment, the refrigeration circuit 2 is disposed in the front portion of the vehicle 100, that is, further frontward of the passenger compartment of the vehicle 100.

### Low Temperature Circuit

Next, the low temperature circuit 3 will be described. The low temperature circuit 3 includes a first pump 31, the coolant pipe 27b of the chiller 27, a low temperature radiator 32, a first three-way valve 33, and a second three-way valve 34. In addition, the low temperature circuit 3 includes a battery heat exchanger 35, a PCU heat exchanger 36, and an MG heat exchanger 37. In the low temperature circuit 3, the coolant circulates through these components. The coolant is an example of a second heat medium, and any other heat medium may be used instead of the coolant in the low temperature circuit 3.

The low temperature circuit 3 is divided into a basic low temperature flow path 3a, a low temperature radiator flow path 3b, and a heat generating device flow path 3c. The low temperature radiator flow path 3b and the heat generating device flow path 3c are disposed in parallel with each other and are connected to the basic low temperature flow path 3a.

In the basic low temperature flow path 3a, the first pump 31, the coolant pipe 27b of the chiller 27, and the battery heat exchanger 35 are provided in this order in the circulation direction of the coolant. Further, a battery bypass flow path 3d provided so as to bypass the battery heat exchanger 35 is connected to the basic low temperature flow path 3a. The first three-way valve 33 is provided at the connection portion between the basic low temperature flow path 3a and the battery bypass flow path 3d.

Further, the low temperature radiator 32 is provided in the low temperature radiator flow path 3b. The PCU heat exchanger 36 and the MG heat exchanger 37 are provided in this order in the heat generating device flow path 3c in the circulation direction of the coolant. A heat exchanger that exchanges heat with a heat generating device other than the MG or the PCU may be provided in the heat generating device flow path 3c. The second three-way valve 34 is provided between the basic low temperature flow path 3a, the low temperature radiator flow path 3b, and the heat generating device flow path 3c.

The first pump 31 pumps the coolant circulating in the low temperature circuit 3. In the present embodiment, the first pump 31 is an electric water pump, and is configured such that its discharge capacity can be changed seamlessly by adjusting the electric power supplied to the first pump 31.

The low temperature radiator 32 is a heat exchanger that exchanges heat between the coolant circulating in the low temperature circuit 3 and the air outside of the vehicle 100 (outside air). The low temperature radiator 32 is configured to release heat from the coolant to the outside air when the temperature of the coolant is higher than the temperature of the outside air, and absorb heat from the outside air to the coolant when the temperature of the coolant is lower than the temperature of the outside air.

The first three-way valve 33 is configured such that the coolant flowing out from the coolant pipe 27b of the chiller 27 selectively flows between the battery heat exchanger 35 and the battery bypass flow path 3d. The second three-way valve 34 is configured such that the coolant flowing out from the basic low temperature flow path 3a selectively flows between the low temperature radiator flow path 3b and the heat generating device flow path 3c.

As long as the flow rate of the coolant flowing into the battery heat exchanger 35 and the battery bypass flow path 3d can be adjusted appropriately, other adjusting devices such as an adjusting valve and an on-off valve may be used instead of the first three-way valve 33. Similarly, as long as the flow rate of the coolant flowing into the low temperature radiator flow path 3b and the heat generating device flow path 3c can be adjusted appropriately, other adjusting devices such as an adjusting valve and an on-off valve can be used instead of the second three-way valve 34.

The battery heat exchanger 35 is configured to exchange heat with the battery 120 of the vehicle 100. Specifically, the battery heat exchanger 35 includes, for example, a pipe provided around the battery 120, and is configured such that heat exchange is performed between the coolant flowing through the pipe and the battery.

The PCU heat exchanger 36 is configured to exchange heat with the PCU 118 of the vehicle 100. Specifically, the PCU heat exchanger 36 includes a pipe provided around the PCU 118, and is configured such that heat exchange is performed between the coolant flowing through the pipe and the PCU. Further, the MG heat exchanger 37 is configured to exchange heat with the MG 112 of the vehicle 100. Specifically, the MG heat exchanger 37 is configured such that heat exchange is performed between the oil flowing around the MG 112 and the coolant.

In the present embodiment, since the MG 112 and the PCU 118 are disposed in the rear portion of the vehicle, as shown in FIG. 3, the PCU heat exchanger 36 and the MG heat exchanger 37 are disposed in the rear portion of the vehicle, that is, further rearward of the vehicle cabin of the vehicle 100. On the other hand, the chiller 27, the first pump 31, the low temperature radiator 32, the first three-way valve 33, and the second three-way valve 34 are disposed in the front portion of the vehicle, that is, further frontward of the vehicle cabin. Further, in the present embodiment, since the battery 120 is disposed below the vehicle cabin, the battery heat exchanger 35 is disposed at the center of the vehicle 100, that is, below the vehicle cabin. The battery 120 may be disposed at a place other than below the vehicle cabin, and therefore the battery heat exchanger 35 may be disposed at a place other than below the vehicle cabin.

### High Temperature Circuit

Next, the high temperature circuit 4 will be described. The high temperature circuit 4 includes a second pump 41, the coolant pipe 22b of the condenser 22, a high temperature radiator 42, a heater core 43, a third three-way valve 44, a fourth three-way valve 45, a third electromagnetic regulating valve 46, a fourth electromagnetic regulating valve 47, and an engine cooling circuit 5. In the high temperature circuit 4, the coolant circulates through these components. The coolant is an example of a first heat medium, and any other heat medium may be used instead of the coolant in the high temperature circuit 4.

The high temperature circuit 4 is divided into a basic high temperature flow path 4a, a high temperature radiator flow path 4b, a heater flow path 4c, an engine inflow flow path 4d, an engine outflow flow path 4e, and a core bypass flow path 4f. In the basic high temperature flow path 4a, the second pump 41 and the coolant pipe 22b of the condenser 22 are provided in this order in the circulation direction of the coolant. In the high temperature radiator flow path 4b, the third electromagnetic regulating valve 46 and the high temperature radiator 42 are provided in this order in the circulation direction of the coolant. Further, in the heater flow path 4c, the fourth electromagnetic regulating valve 47 and the heater core 43 are provided in the circulation direction of the coolant. An electric heater may be provided in the heater flow path 4c on the upstream side of the heater core 43 in the circulation direction of the coolant. The engine cooling circuit 5 is provided between the engine inflow flow path 4d and the engine outflow flow path 4e.

The high temperature radiator flow path 4b and the heater flow path 4c are disposed in parallel with each other and are connected to the basic high temperature flow path 4a. Thus, the heater core 43 and the high temperature radiator 42 are provided in parallel with the second heating unit.

The engine inflow flow path 4d communicates the heater flow path 4c with the engine cooling circuit 5. In particular, the engine inflow flow path 4d communicates the heater flow path 4c on the downstream side of the heater core 43 in the circulation direction of the coolant and the engine cooling circuit 5 on the entrance side of the engine heat exchanger 52 in the circulation direction of the coolant in the engine cooling circuit 5.

The engine outflow flow path 4e also communicates the heater flow path 4c with the engine cooling circuit 5. In particular, the engine outflow flow path 4e communicates the heater flow path 4c on the upstream side of the heater core 43 in the circulation direction of the coolant and the engine cooling circuit 5 on the exit side of the engine heat exchanger 52 in the circulation direction of the coolant in the engine cooling circuit 5.

The core bypass flow path 4f communicates with the engine inflow flow path 4d and the engine outflow flow path 4e. Thus, the coolant flowing out from the engine cooling circuit 5 can flow through the core bypass flow path 4f and return to the engine cooling circuit 5 without flowing through the heater core 43. In other words, the core bypass flow path 4f functions as a flow path that bypasses the heater core 43. The core bypass flow path 4f may be disposed so as to communicate with the heater flow path 4c on the upstream side and the downstream side of the heater core 43 as long as the heater core 43 can be bypassed.

Further, the third three-way valve 44 is provided between the engine outflow flow path 4e and the core bypass flow path 4f. The third three-way valve 44 may be provided between the engine inflow flow path 4d and the core bypass flow path 4f. Further, the fourth three-way valve 45 is provided between the heater flow path 4c and the engine inflow flow path 4d. The fourth three-way valve 45 may be provided between the engine outflow flow path 4e and the heater flow path 4c.

From a different point of view, the high temperature circuit 4 can be considered to have two thermal circuits, a first high temperature circuit and a second high temperature circuit, which share the heater flow path 4c. Of these, the first high temperature circuit has the heater flow path 4c, the engine inflow flow path 4d, the engine cooling circuit 5, the engine outflow flow path 4e, and the core bypass flow path 4f. Thus, in the first high temperature circuit, the coolant can circulate between the engine cooling circuit 5 (particularly, the engine heat exchanger 52) and the heater core 43, and also between the engine cooling circuit 5 and the core bypass flow path 4f. On the other hand, the second high temperature circuit has the heater flow path 4c, the basic high temperature flow path 4a, and the high temperature radiator flow path 4b. Thus, in the second high temperature circuit, the coolant can circulate between the coolant pipe 22b of the condenser 22 and the heater core 43.

The second pump 41 pumps the coolant circulating in the high temperature circuit 4. In the present embodiment, the second pump 41 is an electric water pump similar to the first pump 31. Further, the high temperature radiator 42 is a heat exchanger that exchanges heat between the coolant circulating in the high temperature circuit 4 and the outside air, similarly to the low temperature radiator 32.

The heater core 43 is used to heat the vehicle cabin using the heat of the coolant in the high temperature circuit 4. That is, the heater core 43 is configured to exchange heat between the coolant circulating in the high temperature circuit 4 and the air around the heater core 43 to heat the air around the heater core 43, and as a result, heat the vehicle cabin. Specifically, the heater core 43 is configured to exhaust heat from the coolant to the air around the heater core 43. Therefore, when the high temperature coolant flows through the heater core 43, the temperature of the coolant decreases and the air around the heater core 43 is heated.

The third three-way valve 44 functions as a first communication mode switching device that can switch between a first communication state in which the engine outflow flow path 4e communicates with the heater flow path 4c, a second communication state in which the engine outflow flow path 4e communicates with the core bypass flow path 4f, and a third communication state in which the engine outflow flow path 4e does not communicate with the heater flow path 4c nor with the core bypass flow path 4f. In other words, the third three-way valve 44 functions as a distribution state switching mechanism for switching the distribution state of the heat medium in the high temperature circuit 4. When the third three-way valve 44 is set to the first communication state, the coolant flowing out from the engine cooling circuit 5 flows into the heater flow path 4c on the upstream side of the heater core 43 through the engine outflow flow path 4e. When the third three-way valve 44 is set to the second communication state, the coolant flowing out from the engine cooling circuit 5 flows into the core bypass flow path 4f through the engine outflow flow path 4e. When the third three-way valve 44 is set to the third communication state, the coolant in the engine cooling circuit 5 does not flow out to the engine outflow flow path 4e, and thus circulates within the engine cooling circuit 5. As long as the flow rate of the coolant flowing from the engine cooling circuit 5 into the heater flow path 4c and the core bypass flow path 4f can be adjusted appropriately, other distribution mode control devices such as an adjusting valve and an on-off valve may be used instead of the third three-way valve 44.

The fourth three-way valve 45 functions as a second communication mode switching device that can switch between a first communication state in which the heater flow path 4c communicates with the high temperature circuit 4 and a second communication state in which the heater flow path 4c communicates with the engine inflow flow path 4d. In other words, the fourth three-way valve 45 functions as the distribution state switching mechanism for switching the distribution state of the heat medium in the high temperature circuit 4. When the fourth three-way valve 45 is set to the first communication state, the coolant flowing out from the heater core 43 flows into the second pump 41 through the heater flow path 4c. On the other hand, when the fourth three-way valve 45 is set to the second communication state, the coolant flowing out from the heater core 43 flows into the engine cooling circuit 5 through the engine inflow flow path 4d. As long as the flow rate of the coolant flowing from the heater core 43 into the second pump 41 and the engine cooling circuit 5 can be adjusted appropriately, other distribution mode control devices such as an adjusting valve and an on-off valve may be used instead of the fourth three-way valve 45.

The third electromagnetic regulating valve 46 and the fourth electromagnetic regulating valve 47 are used as third distribution mode control devices that control the distribution mode of the coolant in the high temperature circuit 4, and particularly the distribution mode of the coolant from the coolant pipe 22b of the condenser 22 to the high temperature radiator 42 and the heater core 43. As the opening degree of the third electromagnetic regulating valve 46 increases, the amount of the coolant flowing into the high temperature radiator flow path 4b increases, and thus the amount of the coolant flowing into the high temperature radiator 42 increases. Further, as the opening degree of the fourth electromagnetic regulating valve 47 increases, the amount of the coolant flowing into the heater flow path 4c increases, and thus the amount of the coolant flowing into the heater core 43 increases. In the present embodiment, the electromagnetic regulating valves 46 and 47 are configured as valves whose opening degrees can be adjusted, but may be on-off valves that can be switched between an open state and a closed state. Further, instead of the third electromagnetic regulating valve 46 and the fourth electromagnetic regulating valve 47, a three-way valve may be provided that allows the coolant from the basic high temperature flow path 4a to selectively flow into the high temperature radiator flow path 4b only, the heater flow path 4c only, and/or both the high temperature radiator flow path 4b and the heater flow path 4c. Therefore, any valve may be provided as the third distribution mode control device instead of these electromagnetic regulating valves 46 and 47 as long as the flow rate flowing from the basic high temperature flow path 4a into the high temperature radiator flow path 4b and the heater flow path 4c can be adjusted.

As shown in FIG. 3, in the present embodiment, the engine cooling circuit 5 is disposed in the rear portion of the vehicle 100, that is, further rearward of the vehicle cabin of the vehicle 100. On the other hand, the components (the condenser 22, the high temperature radiator 42, the heater core 43, etc.) of the high temperature circuit 4 other than the engine cooling circuit 5 are disposed in the front portion of the vehicle 100, that is, further frontward of the vehicle cabin. Further, the core bypass flow path 4f is also disposed further frontward of the vehicle cabin. Therefore, the engine inflow flow path 4d and the engine outflow flow path 4e are disposed so as to extend between the front and rear of the vehicle cabin.

### Engine Cooling Circuit

Next, the engine cooling circuit 5 will be described. The engine cooling circuit 5 includes a third pump 51, an engine heat exchanger 52, an engine radiator 53, and a thermostat 54. In the engine cooling circuit 5, the same coolant as in the high temperature circuit 4 circulates through these components.

The engine cooling circuit 5 is divided into a basic engine flow path 5a, an engine radiator flow path 5b, and an engine bypass flow path 5c. The engine radiator flow path 5b and the engine bypass flow path 5c are disposed in parallel with each other and are connected to the basic engine flow path 5a.

In the basic engine flow path 5a, the third pump 51 and the engine heat exchanger 52 are provided in this order in the circulation direction of the coolant. The engine radiator 53 is provided in the engine radiator flow path 5b. Further, the engine inflow flow path 4d and the engine outflow flow path 4e communicate with the engine bypass flow path 5c. In particular, the engine inflow flow path 4d communicates with the downstream portion of the engine bypass flow path 5c. As a result, the engine inflow flow path 4d communicates with the vicinity of the entrance of the engine heat exchanger 52. On the other hand, the engine outflow flow path 4e communicates with the upstream portion of the engine bypass flow path 5c. As a result, the engine outflow flow path 4e communicates with the vicinity of the exit of the engine heat exchanger 52. Therefore, the engine heat exchanger 52 is configured to communicate with the high temperature circuit 4 and such that the coolant of the high temperature circuit 4 flows through the engine heat exchanger 52. The thermostat 54 is provided between the basic engine flow path 5a and the engine radiator flow path 5b, and between the basic engine flow path 5a and the engine bypass flow path 5c. In the example shown in FIG. 3, the engine outflow flow path 4e communicates with the engine bypass flow path 5c, but may communicate with the engine radiator flow path 5b.

The third pump 51 pumps the coolant circulating in the engine cooling circuit 5. In the present embodiment, the third pump 51 is an electric water pump similar to the first pump 31. Further, the engine radiator 53 is a heat exchanger that exchanges heat between the coolant circulating in the engine cooling circuit 5 and the outside air, similarly to the low temperature radiator 32.

The engine heat exchanger 52 functions as a first heating unit used to heat the coolant using the exhaust heat of the internal combustion engine 110. That is, the engine heat exchanger 52 exhausts heat of the internal combustion engine 110 to the coolant in the engine cooling circuit 5 to heat the coolant. The engine heat exchanger 52 suppresses the temperature of the internal combustion engine 110 from rising excessively by discharging heat generated by the combustion of the fuel in the internal combustion engine 110 to the coolant. The engine heat exchanger 52 has, for example, a coolant passage provided in a cylinder block or a cylinder head of the internal combustion engine 110.

The thermostat 54 is a valve that can be switched between a valve closed state that blocks the coolant flowing through the engine radiator flow path 5b and a valve open state that allows the coolant to flow through the engine radiator flow path 5b. The thermostat 54 is opened so that the coolant flows through the engine radiator flow path 5b when the temperature of the coolant circulating through the engine bypass flow path 5c is equal to or higher than a preset temperature. On the other hand, the thermostat 54 is closed so that the coolant does not flow through the engine radiator flow path 5b when the temperature of the coolant circulating through the engine bypass flow path 5c is lower than the preset temperature. As a result, the temperature of the coolant flowing through the engine heat exchanger 52 is kept substantially constant.

### Air Passage

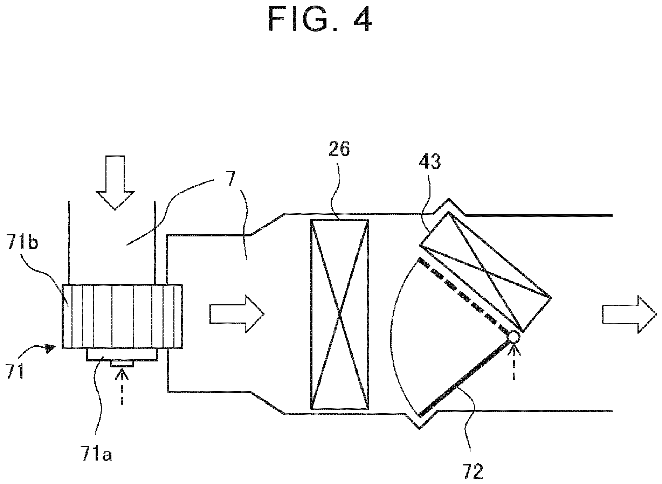

FIG. 4 is a configuration diagram schematically showing an air passage 7 for air conditioning of the vehicle 100 equipped with the in-vehicle temperature control system 1. In the air passage 7, air flows in the direction indicated by the arrows in FIG. 4. The air passage 7 shown in FIG. 4 is connected to an air suction port outside the vehicle 100 or in the vehicle cabin, and the outside air or the air in the vehicle cabin flows into the air passage 7 based on a control state of the control device 6. Further, the air passage 7 shown in FIG. 4 is connected to a plurality of air blow ports for blowing air into the vehicle cabin, and air is supplied from the air passage 7 to any of the ports based on the control state of the control device 6.

As shown in FIG. 4, in the air passage 7 for air conditioning of the present embodiment, a blower 71, the evaporator 26, an air mix door 72, and the heater core 43 are provided in this order in the air flow direction.

The blower 71 includes a blower motor 71a and a blower fan 71b. The blower 71 is configured such that, when the blower fan 71b is driven by the blower motor 71a, the outside air or the air in the vehicle cabin flows into the air passage 7 and the air flows through the air passage 7.

The air mix door 72 adjusts the flow rate of the air flowing through the heater core 43 among the air flowing through the air passage 7. The air mix door 72 is configured to be adjustable among a state in which all the air flowing through the air passage 7 flows through the heater core 43, a state in which all the air flowing through the air passage 7 does not flow through the heater core 43, and a state in which a part of the air flowing through the air passage flows through the heater core 43.

In the air passage 7 configured in this way, when the blower 71 is being driven and the refrigerant is circulated in the evaporator 26, the air flowing through the air passage 7 is cooled. Further, when the blower 71 is being driven, the coolant is circulated in the heater core 43, and the air mix door 72 is controlled so that the air flows through the heater core 43, the air flowing through the air passage 7 is heated.

As shown in FIG. 1, the low temperature radiator 32, the high temperature radiator 42, and the engine radiator 53 are disposed inside a front grill of the vehicle 100. Thus, when the vehicle 100 is traveling, the radiators 32, 42, and 53 are exposed to traveling wind. Further, a fan 76 is provided adjacent to these radiators 32, 42, 53. The fan 76 is configured such that when the fan 76 is driven, the radiators 32, 42, and 53 are exposed to the wind. Thus, even when the vehicle 100 is not traveling, the radiators 32, 42, and 53 can be exposed to the wind by driving the fan 76.

### Control Device

Referring to FIG. 3, the control device 6 includes an electronic control unit (ECU) 61. The ECU 61 includes a processor that performs various calculations, a memory that stores programs and various pieces of information, and an interface that is connected to various actuators and various sensors.

Further, the control device 6 includes a first water temperature sensor 62 that detects the temperature of the coolant in the engine cooling circuit 5, particularly the temperature of the coolant flowing through the engine bypass flow path 5c. In addition, the control device 6 includes a second water temperature sensor 63 that detects the temperature of the coolant flowing through the engine outflow flow path 4e in the front portion of the vehicle, or the temperature of the coolant flowing into the heater flow path 4c or the core bypass flow path 4f. The ECU 61 is connected to these sensors, and output signals from these sensors are input to the ECU 61.

In addition, the control device 6 includes an indoor temperature sensor 66 that detects the indoor temperature of the vehicle 100, an outside air temperature sensor 67 that detects the outdoor temperature of the vehicle 100, and an operation panel 68 that is operated by the user. The ECU 61 is connected to these sensors and the operation panel 68, and output signals from these sensors and the operation panel 68 are input to the ECU 61.

The ECU 61 determines whether there is a cooling request or a heating request based on the output signals from the sensors 66 and 67 and the operation panel 68. For example, when the user turns on the heating switch of the operation panel 68, the ECU 61 determines that heating is requested. Further, when the user turns on the auto switch of the operation panel 68, for example, when the indoor temperature set by the user is lower than the temperature detected by the indoor temperature sensor 66, the ECU 61 determines that heating is requested.

In addition, the ECU 61 is connected to various actuators of the in-vehicle temperature control system 1 to control these actuators. Specifically, the ECU 61 is connected to the compressor 21, the electromagnetic regulating valves 28, 29, 46, 47, the pumps 31, 41, 51, the three-way valves 33, 34, 44, 45, the blower motor 71a, the air mix door 72, and the fan 76 to control these components. Therefore, the ECU 61 functions as a control device that controls the distribution state switching mechanism that switches the distribution state of the heat medium (refrigerant and coolant) in the refrigeration circuit 2, the low temperature circuit 3, and the high temperature circuit 4 (including the engine cooling circuit 5).

### Operation of In-Vehicle Temperature Control System

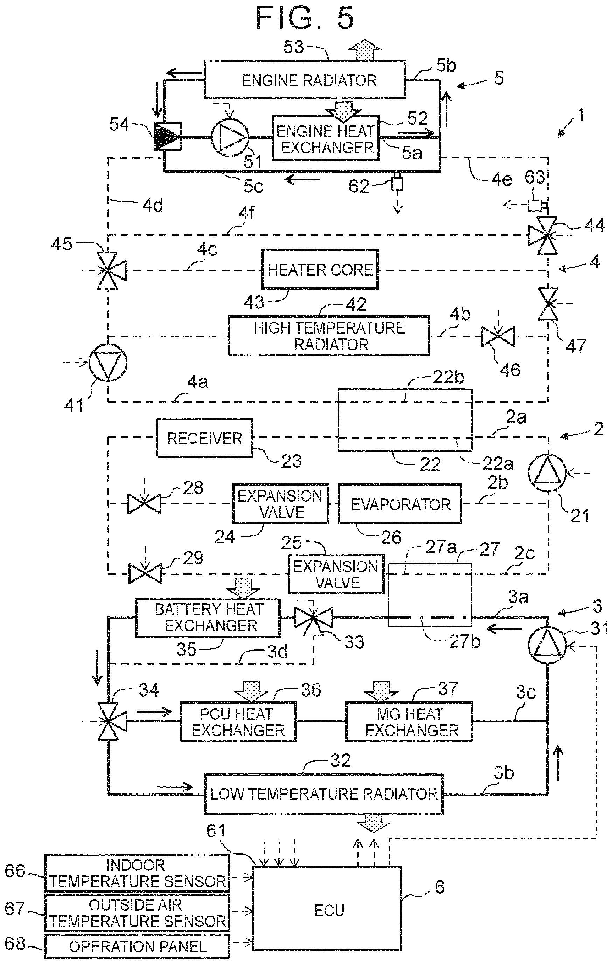

Next, the distribution state of a typical heat medium (refrigerant and coolant) in the in-vehicle temperature control system 1 will be described with reference to FIGS. 5 to 10. In FIGS. 5 to 10, the flow paths through which the refrigerant and coolant flow are shown by solid lines, and the flow paths through which the refrigerant and coolant do not flow are shown by dashed lines. The thin arrows in the figures indicate the direction in which the refrigerant and coolant flow, and the thick arrows in the figure indicate the direction in which heat is transferred.

FIG. 5 shows a distribution state (first stop mode) of a heat medium in the in-vehicle temperature control system 1 when neither cooling nor heating of the vehicle cabin is requested and cooling of a heat generating device such as a battery is required.

As shown in FIG. 5, in the first stop mode, the operation of the compressor 21 and the second pump 41 is stopped. Thus, the refrigerant does not circulate in the refrigeration circuit 2, and the coolant does not circulate in the high temperature circuit 4. On the other hand, in the first stop mode, the first pump 31 is operated. Thus, the coolant circulates in the low temperature circuit 3.

Further, in the first stop mode, the first three-way valve 33 is set so that the coolant flows through the battery heat exchanger 35. Further, in the example shown in FIG. 5, the second three-way valve 34 is set so that the coolant flows through both the low temperature radiator flow path 3b and the heat generating device flow path 3c. The first three-way valve 33 may be set so that the coolant does not flow through the battery heat exchanger 35 in the first stop mode.

As a result, in the first stop mode, heat of the battery, the MG 112, and the PCU 118 (heat generating devices) is transferred to the coolant in the battery heat exchanger 35, the PCU heat exchanger 36, and the MG heat exchanger 37 (hereinafter collectively referred to as "heat exchangers of the heat generating devices"). Therefore, the heat generating devices are cooled, and the temperature of the coolant rises to a temperature equal to or higher than the temperature of the outside air. After that, the coolant is cooled by exchanging heat with the outside air in the low temperature radiator 32, and flows into the heat exchangers of the heat generating devices again. Therefore, in the first stop mode, heat is absorbed from the heat generating devices by the heat exchangers of the heat generating devices, and the heat is released by the low temperature radiator 32.

In the example shown in FIG. 5, the internal combustion engine 110 is operating at this time. Thus, the third pump 51 is operated and the third three-way valve 44 is set to the third communication state, so that the coolant circulates in the engine cooling circuit 5. When the temperature of the coolant in the engine cooling circuit 5 is high, the thermostat 54 opens and the coolant circulates in the engine radiator 53 as well. Further, when the internal combustion engine 110 is stopped, the operation of the third pump 51 is stopped, so that the coolant does not circulate in the engine cooling circuit 5.

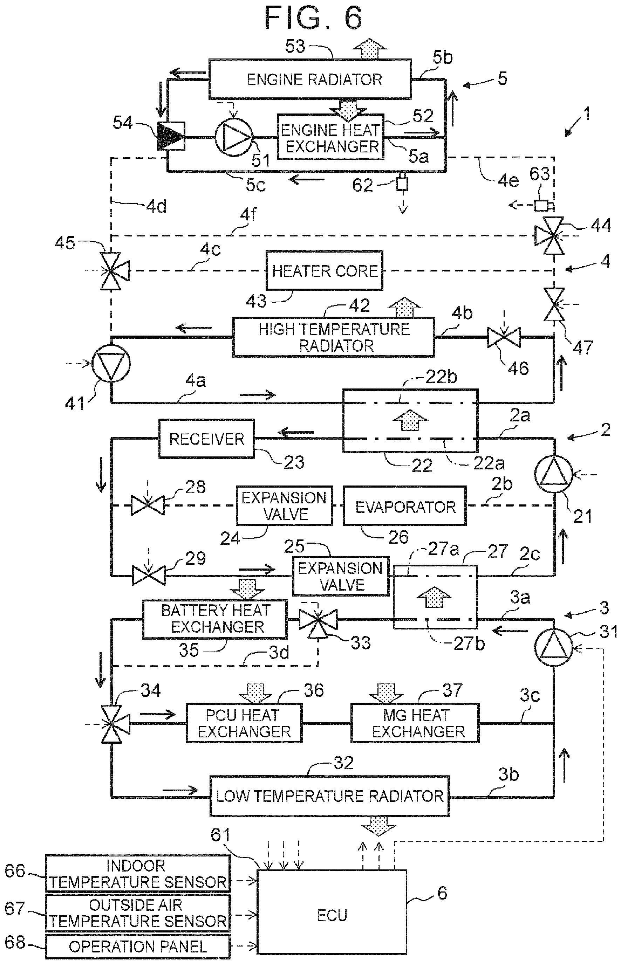

FIG. 6 shows a distribution state (second stop mode) of the heat medium in the in-vehicle temperature control system 1 when neither cooling nor heating of the vehicle cabin is requested and rapid cooling of the heat generating device is required. Further, in the example shown in FIG. 6, the internal combustion engine 110 is operating.

As shown in FIG. 6, in the second stop mode, all of the compressor 21, the first pump 31, and the second pump 41 are operated. Therefore, the refrigerant or the coolant circulates in all of the refrigeration circuit 2, the low temperature circuit 3, and the high temperature circuit 4.

Further, in the second stop mode, the first electromagnetic regulating valve 28 is closed and the second electromagnetic regulating valve 29 is opened. Thus, the refrigerant does not flow through the evaporator 26, and the refrigerant flows through the chiller 27. In addition, in the second stop mode, the first three-way valve 33 is set so that the coolant flows through the battery heat exchanger 35. Further, in the example shown in FIG. 6, the second three-way valve 34 is set so that the coolant flows through both the low temperature radiator flow path 3b and the heat generating device flow path 3c. As a result, the coolant also flows through the PCU heat exchanger 36 and the MG heat exchanger 37, so that the MG 112 and the PCU 118 can be cooled. Further, in the second stop mode, the third electromagnetic regulating valve 46 is opened and the fourth electromagnetic regulating valve 47 is closed. Therefore, the coolant in the high temperature circuit 4 flows into the high temperature radiator flow path 4b after passing through the condenser 22.

As a result, in the second stop mode, heat of the coolant in the low temperature circuit 3 is transferred to the refrigerant in the chiller 27, and the coolant is cooled. After that, the low temperature coolant flows through the heat exchangers of the heat generating devices such as the battery heat exchanger 35, and the heat generating devices are cooled. On the other hand, the heat of the refrigerant is transferred to the high temperature circuit 4 in the condenser 22, and the coolant in the high temperature circuit 4 is heated. After that, the high temperature coolant is cooled by exchanging heat with the outside air in the high temperature radiator 42, and flows into the condenser 22 again. Therefore, in the second stop mode, heat is absorbed from the heat generating devices by the heat exchangers of the heat generating devices, and the heat is released by the high temperature radiator 42.

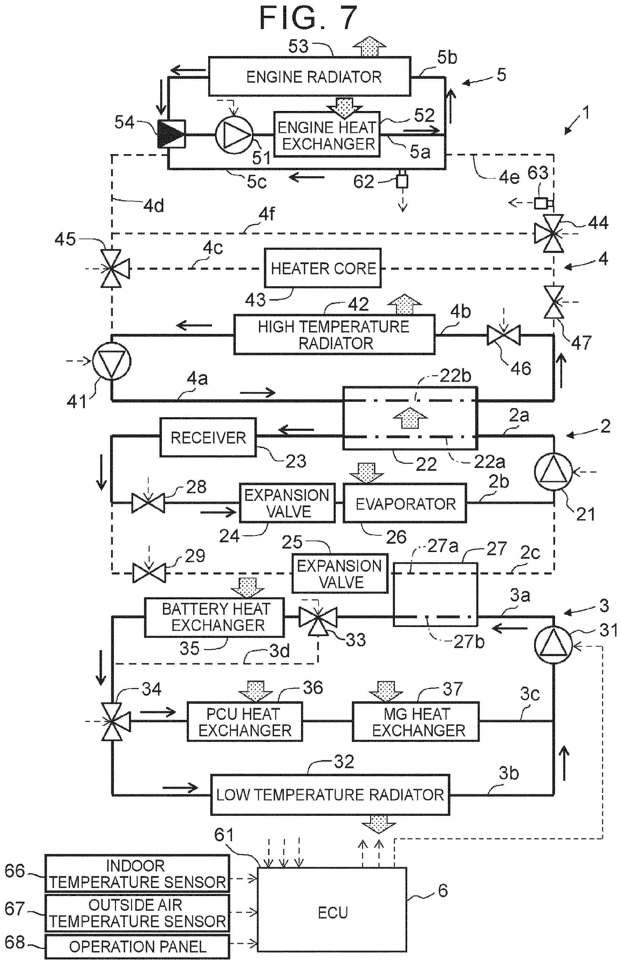

FIG. 7 shows a distribution state (first cooling mode) of the heat medium in the in-vehicle temperature control system 1 when cooling of the vehicle cabin is requested and cooling of the heat generating devices is required. In the example shown in FIG. 7, the internal combustion engine 110 is operating.

As shown in FIG. 7, in the first cooling mode, all of the compressor 21, the first pump 31, and the second pump 41 are operated. Further, in the first cooling mode, the first electromagnetic regulating valve 28 is opened and the second electromagnetic regulating valve 29 is closed, and the third electromagnetic regulating valve 46 is opened and the fourth electromagnetic regulating valve 47 is closed. Further, in the example shown in FIG. 7, the second three-way valve 34 is set so that the coolant flows through both the low temperature radiator flow path 3b and the heat generating device flow path 3c.

As a result, in the first cooling mode, heat of the surrounding air is transferred to the refrigerant by the evaporator 26, and the surrounding air is cooled. On the other hand, heat of the refrigerant is transferred to the high temperature circuit 4 in the condenser 22, and the coolant in the high temperature circuit 4 is heated. After that, the high temperature coolant is cooled by exchanging heat with the outside air in the high temperature radiator 42, and flows into the condenser 22 again. Therefore, in the first cooling mode, the evaporator 26 absorbs heat from the surrounding air and the high temperature radiator 42 releases the heat.

Further, in the first cooling mode, heat of the heat generating devices is transferred to the coolant in the heat exchangers of the heat generating devices, and then the coolant is cooled by exchanging heat with the outside air in the low temperature radiator 32 and flows into the battery heat exchanger 35 again. Therefore, heat is absorbed from the heat generating devices by the heat exchangers of the heat generating devices, and the heat is released by the low temperature radiator 32.

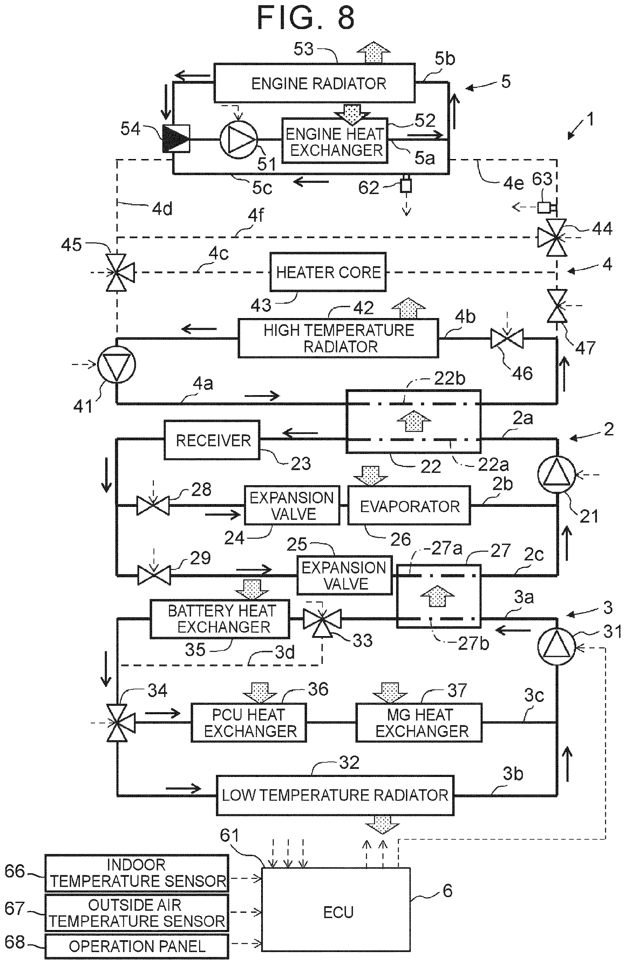

FIG. 8 shows a distribution state (second cooling mode) of the heat medium in the in-vehicle temperature control system 1 when cooling of the vehicle cabin is requested and rapid cooling of the heat generating devices is required.

As shown in FIG. 8, in the second cooling mode, all of the compressor 21, the first pump 31, and the second pump 41 are operated. Further, in the second cooling mode, both the first electromagnetic regulating valve 28 and the second electromagnetic regulating valve 29 are opened so that the refrigerant flows through both the evaporator 26 and the chiller 27. The opening degrees of the electromagnetic regulating valves 28 and 29 at this time are adjusted based on the cooling strength, the temperature of the battery, and the like. In addition, in the second cooling mode, the first three-way valve 33 is set so that the coolant flows through the battery heat exchanger 35. Further, in the example shown in FIG. 8, the second three-way valve 34 is set so that the coolant flows through both the low temperature radiator flow path 3b and the heat generating device flow path 3c. However, the second three-way valve 34 may be set so that the coolant flows only through the low temperature radiator flow path 3b. Further, in the second cooling mode, the third electromagnetic regulating valve 46 is opened and the fourth electromagnetic regulating valve 47 is closed.

As a result, in the second cooling mode, heat of the coolant in the low temperature circuit 3 is transferred to the refrigerant in the chiller 27, and the coolant is cooled. After that, the low temperature coolant flows through the heat exchangers of the heat generating devices, and the heat generating devices are cooled. Further, in the second cooling mode, heat of the surrounding air is transferred to the refrigerant by the evaporator 26, and the surrounding air is cooled. On the other hand, heat of the refrigerant is transferred to the high temperature circuit 4 in the condenser 22, and the coolant in the high temperature circuit 4 is heated. After that, the high temperature coolant is cooled by exchanging heat with the outside air in the high temperature radiator 42, and flows into the condenser 22 again. Therefore, in the second cooling mode, heat is absorbed from the heat generating devices by the heat exchangers of the heat generating devices, heat is absorbed from the surrounding air by the evaporator 26, and the heat is released by the high temperature radiator 42.

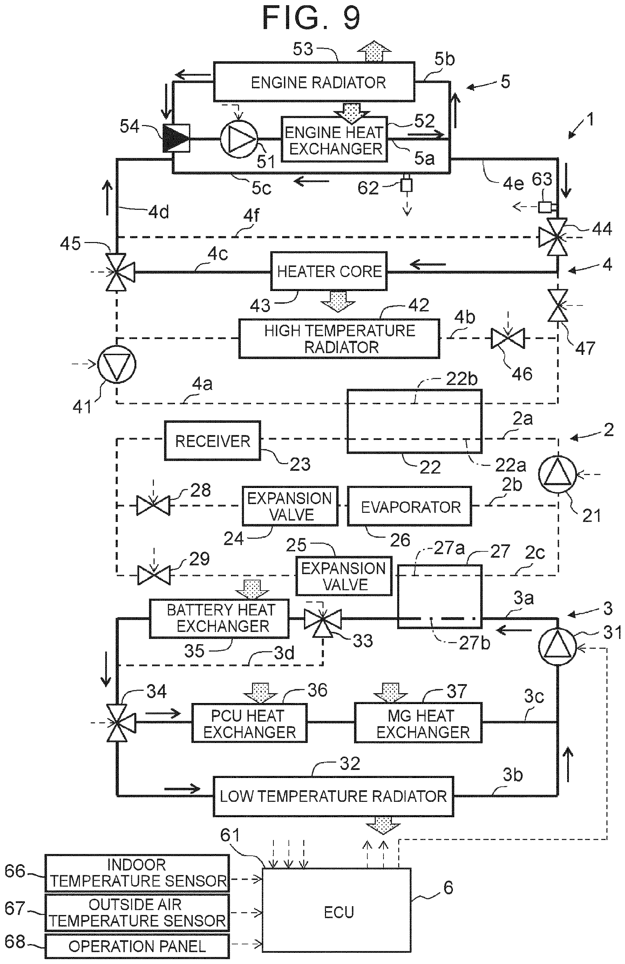

FIG. 9 shows a distribution state (first distribution state) of the heat medium in the in-vehicle temperature control system 1 when heating of the vehicle cabin is requested and the internal combustion engine is operated in a warmed state (first heating mode).

As shown in FIG. 9, in the first heating mode, the compressor 21 is stopped. Thus, the refrigerant does not circulate in the refrigeration circuit 2. The second pump 41 is also stopped. Further, as shown in FIG. 9, both the first pump 31 and the third pump 51 are operated. Therefore, the coolant circulates in the low temperature circuit 3 and the engine cooling circuit 5.

Further, in the first heating mode, the third three-way valve 44 is set to the first communication state, and the fourth three-way valve 45 is set to the second communication state. Therefore, the engine outflow flow path 4e communicates with the heater flow path 4c, and the heater flow path 4c communicates with the engine inflow flow path 4d. As a result, in the high temperature circuit 4, the coolant flowing out from the engine cooling circuit 5 flows into the heater flow path 4c through the engine outflow flow path 4e, and then passes through the engine inflow flow path 4d to return to the engine cooling circuit 5. Therefore, in the first heating mode, a part of the coolant heated in the engine heat exchanger 52 flows through the heater core 43 without passing through the core bypass flow path 4f.

In addition, in the first heating mode, the coolant in the low temperature circuit 3 circulates in the low temperature circuit 3 as in the first stop mode. Therefore, in the first heating mode, heat is absorbed from the heat generating devices by the heat exchangers of the heat generating devices, and the heat is released by the low temperature radiator 32.

As a result, in the first heating mode, a part of the coolant in the engine cooling circuit 5 whose temperature has been raised by the heat of the internal combustion engine in the engine heat exchanger 52 flows into the heater core 43. The coolant flowing into the heater core 43 is cooled by exchanging heat with the air around the heater core 43, and the temperature of the surrounding air is raised accordingly. Therefore, in the first heating mode, heat is absorbed from the internal combustion engine in the engine heat exchanger 52, and the heat is released by the heater core 43. In addition, in the first heating mode, heat is absorbed from the heat generating devices by the heat exchangers of the heat generating devices, and the heat is released by the low temperature radiator 32.

When heating and dehumidifying of the vehicle cabin is requested and the internal combustion engine is operated in a warmed state, the compressor 21 is operated, the first electromagnetic regulating valve 28 is opened, and the second electromagnetic regulating valve 29 is closed in the first heating mode. Therefore, the refrigerant circulates in the refrigeration circuit 2. In addition, the second pump 41 is operated and the third electromagnetic regulating valve 46 is opened. Therefore, the coolant circulates between the high temperature radiator 42 and the condenser 22.

The distribution state of the heat medium shown in FIG. 9 is an example in the first heating mode. Thus, the distribution state may be different from the distribution state shown in FIG. 9 as long as a part of the coolant heated in the engine heat exchanger 52 flows through the heater core 43 without passing through the core bypass flow path 4f. For example, in the first heating mode, the coolant need not circulate in the low temperature circuit 3, and the coolant need not circulate in some of the heat exchangers of the heat generating devices. Further, the refrigerant may circulate in the refrigeration circuit 2.

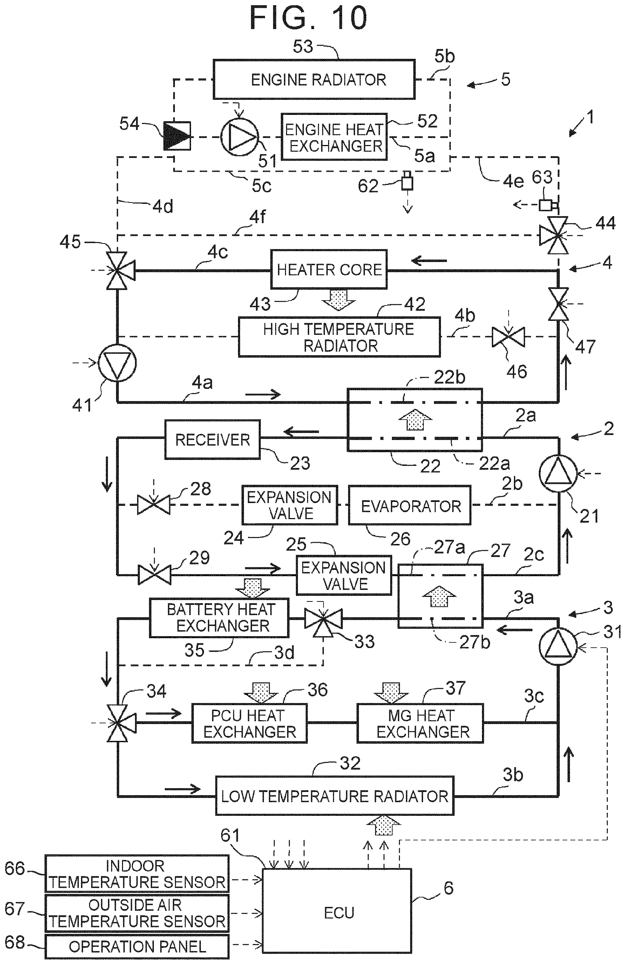

FIG. 10 shows a distribution state (fourth distribution state) of the heat medium in the in-vehicle temperature control system 1 when heating of the vehicle cabin is requested and the internal combustion engine is stopped (fourth heating mode).

As shown in FIG. 10, in the fourth heating mode, the compressor 21, the first pump 31, and the second pump 41 are operated. Further, in the fourth heating mode, the first electromagnetic regulating valve 28 is closed and the second electromagnetic regulating valve 29 is opened. Thus, the refrigerant does not flow through the evaporator 26, and the refrigerant flows through the chiller 27. In addition, in the fourth heating mode, the first three-way valve 33 is set so that the coolant flows through the battery heat exchanger 35. Further, in the example shown in FIG. 10, the second three-way valve 34 is set so that the coolant flows through both the low temperature radiator flow path 3b and the heat generating device flow path 3c. However, the second three-way valve 34 may be set so that the coolant flows only through the low temperature radiator flow path 3b. Further, in the fourth heating mode, the third electromagnetic regulating valve 46 is closed, the fourth electromagnetic regulating valve 47 is opened, and the fourth three-way valve 45 is set to the first communication state. Therefore, the coolant in the high temperature circuit 4 flows into the heater flow path 4c after passing through the condenser 22, and returns to the condenser 22 again. Further, the internal combustion engine 110 is stopped, and therefore the third pump 51 is also stopped. Therefore, the coolant does not flow through the engine inflow flow path 4d nor the engine outflow flow path 4e.

As a result, in the fourth heating mode, heat of the coolant in the low temperature circuit 3 is transferred to the refrigerant in the chiller 27, and the coolant is cooled. As shown in FIG. 10, when the first three-way valve 33 and the second three-way valve 34 are set so that the coolant flows through the heat exchangers of the heat generating devices, the low temperature coolant flows through the heat exchangers of the heat generating devices and the low temperature radiator 32, and heat is absorbed from the heat generating devices and the outside air into the coolant.

Further, heat of the refrigerant is transferred to the high temperature circuit 4 in the condenser 22, and the coolant in the high temperature circuit 4 is heated. After that, the high temperature coolant is cooled by exchanging heat with the air around the heater core 43, and the temperature of the surrounding air is raised accordingly. Therefore, in the fourth heating mode, heat is absorbed from the outside air by the low temperature radiator 32, and in some cases, the heat exchangers of the heat generating devices absorb the heat from the heat generating devices, and the heat is released by the heater core 43.

The distribution state of the heat medium shown in FIG. 10 is an example of the fourth heating mode. Thus, the distribution state may be different from the distribution state shown in FIG. 10 as long as the coolant heated in the condenser 22 flows through the heater core 43. For example, in the fourth heating mode, the coolant need not circulate in some of the heat exchangers of the heat generating devices in the low temperature circuit 3. Further, when heating and dehumidifying of the vehicle cabin is requested and the internal combustion engine is stopped, the refrigerant may flow through the evaporator 26 in the refrigeration circuit 2.

### Cold Start of Internal Combustion Engine

Next, control of the distribution state of the heat medium when the internal combustion engine 110 is cold-started and heating of the vehicle cabin is requested will be described. Here, a period during the cold start of the internal combustion engine 110 means a period during warm-up from the start of operation of the internal combustion engine 110 in a state where the temperature of the internal combustion engine 110 is low until the temperature of the internal combustion engine 110 becomes sufficiently high. Specifically, a period during the cold start of the internal combustion engine 110 means, for example, a period until the temperature of the coolant circulating in the engine cooling circuit 5 reaches a warm-up reference temperature (for example, 80°C).

Before the start of cold start of the internal combustion engine 110, the internal combustion engine 110 is stopped. If heating of the vehicle cabin is requested before the start of the cold start of the internal combustion engine 110, the in-vehicle temperature control system 1 is operated in the fourth heating mode (FIG. 10) before the start of the cold start of the internal combustion engine 110. On the other hand, when the heating request of the vehicle cabin is started at the same time as the cold start of the internal combustion engine 110 is started, the in-vehicle temperature control system 1 is operated in the first stop mode (FIG. 5) or is stopped before the cold start is started. Therefore, before the cold start of the internal combustion engine 110 is started, the coolant does not flow at least in the engine cooling circuit 5, the engine inflow flow path 4d, and the engine outflow flow path 4e.

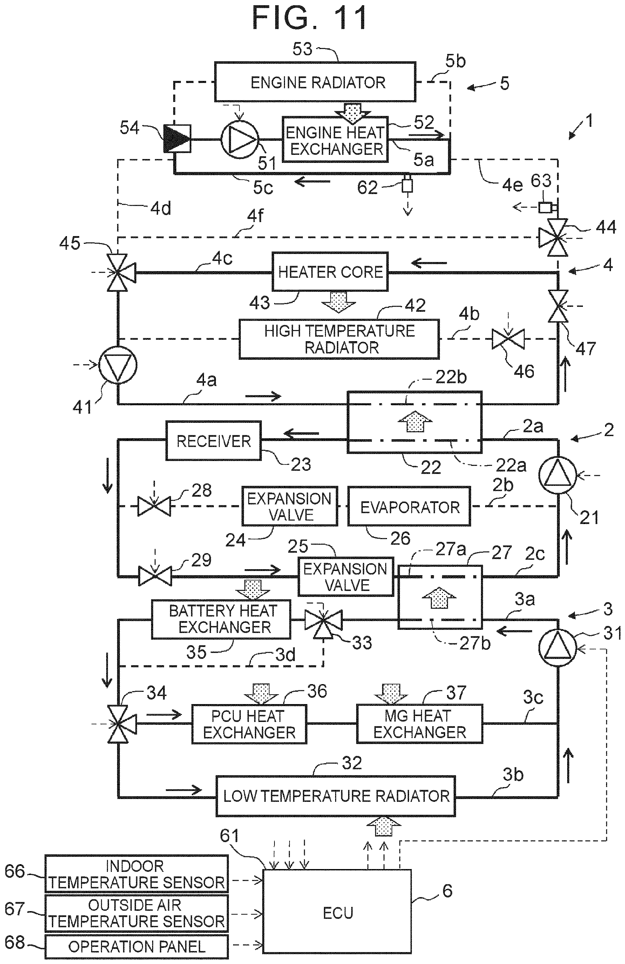

In the present embodiment, when the cold start of the internal combustion engine 110 is started in a state where heating of the vehicle cabin is requested, the distribution state of the heat medium of the in-vehicle temperature control system 1 is set to the third distribution state (third heating mode). FIG. 11 shows the third distribution state of the heat medium of the in-vehicle temperature control system 1.

As shown in FIG. 11, in the third heating mode, the third pump 51 is operated and the third three-way valve 44 is set to the third communication state. Therefore, the coolant in the engine cooling circuit 5 circulates in the engine cooling circuit 5 without flowing out to the engine outflow flow path 4e. Therefore, the coolant flowing out from the engine heat exchanger 52 flows into the engine heat exchanger 52 again without flowing through the heater core 43 and the core bypass flow path 4f.

At this time, the temperature of the internal combustion engine 110 is low, and therefore the temperature of the coolant in the engine cooling circuit 5 is also low, so that the thermostat 54 is closed. Thus, the coolant does not circulate in the engine radiator flow path 5b, and the coolant does not flow in the engine radiator 53. Thus, in the engine cooling circuit 5, the coolant circulates through the basic engine flow path 5a and the engine bypass flow path 5c. As a result, the temperature of the coolant in the engine cooling circuit 5 flowing through the engine heat exchanger 52 gradually rises.

Further, as shown in FIG. 11, in the third heating mode, as in the fourth heating mode shown in FIG. 10, the compressor 21, the first pump 31, and the second pump 41 are operated. Further, in the third heating mode, as in the fourth heating mode, the first electromagnetic regulating valve 28 is closed, the second electromagnetic regulating valve 29 is opened, and the fourth three-way valve 45 is set to the first communication state. As a result, in the third heating mode, heat is absorbed from the outside air by the low temperature radiator 32, and in some cases, the heat exchangers of the heat generating devices absorb the heat from the heat generating devices, and the heat is released by the heater core 43.

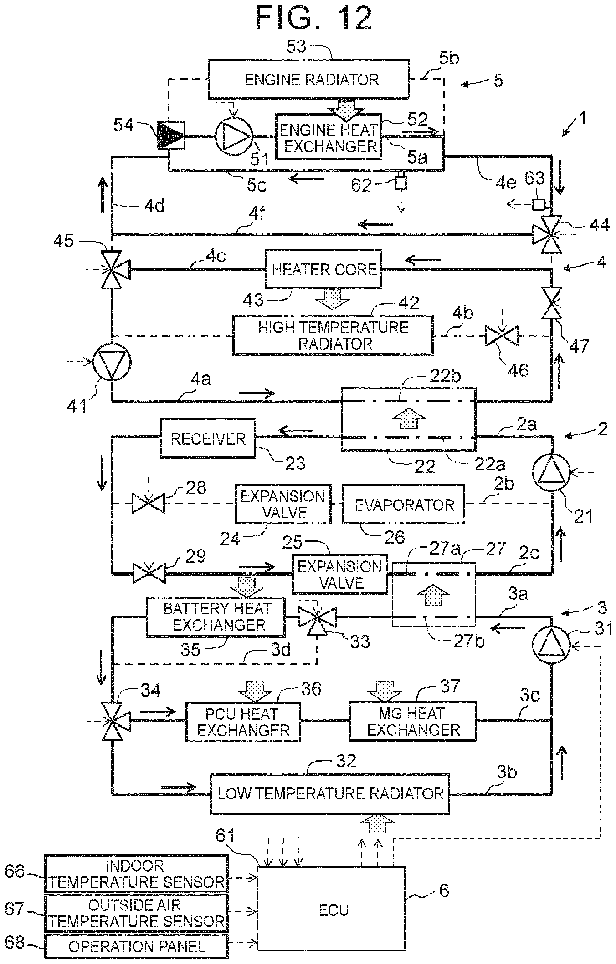

When the temperature of the coolant in the engine cooling circuit 5 flowing through the engine heat exchanger 52 rises and becomes equal to or higher than the first reference temperature, the distribution state of the heat medium of the in-vehicle temperature control system 1 is set to the second distribution state (second heating mode). FIG. 12 shows the second distribution state of the heat medium of the in-vehicle temperature control system 1. The first reference temperature is, for example, a temperature at which the deterioration of exhaust emissions becomes large when the temperature is lower than the first reference temperature, and specifically, for example, 40°C.

The distribution state of the heat medium shown in FIG. 11 is an example of the third heating mode. Thus, the distribution state may be different from the distribution state shown in FIG. 11 as long as the coolant heated in the condenser 22 flows through the heater core 43 and the coolant is circulated in the engine cooling circuit 5. For example, in the third heating mode, the coolant need not circulate in some of the heat exchangers of the heat generating devices in the low temperature circuit 3. Further, when heating and dehumidifying of the vehicle cabin is requested, the refrigerant may flow through the evaporator 26 in the refrigeration circuit 2.

As shown in FIG. 12, in the second heating mode, the third pump 51 is operated and the third three-way valve 44 is set to the second communication state. Therefore, a part of the coolant in the engine cooling circuit 5 flows out to the engine outflow flow path 4e, and then returns to the engine cooling circuit 5 again by passing through the core bypass flow path 4f and the engine inflow flow path 4d. Therefore, in the second heating mode, a part of the coolant heated in the engine heat exchanger 52 flows through the core bypass flow path 4f without passing through the heater core 43.

At this time, the temperature of the internal combustion engine 110 is not so high, and the temperature of the coolant in the engine cooling circuit 5 is lower than the warm-up reference temperature. Thus, the thermostat 54 is closed and the coolant does not circulate in the engine radiator flow path 5b. Therefore, also in the second heating mode, as in the third heating mode, in the engine cooling circuit 5, the coolant basically circulates through the basic engine flow path 5a and the engine bypass flow path 5c, and a part of the coolant circulates through the engine outflow flow path 4e, the core bypass flow path 4f, and the engine inflow flow path 4d. As a result, the temperature of the coolant flowing through the engine outflow flow path 4e, the core bypass flow path 4f, and the engine inflow flow path 4d gradually rises.

Further, as shown in FIG. 12, in the second heating mode, as in the fourth heating mode shown in FIG. 10, the compressor 21, the first pump 31, and the second pump 41 are operated. Further, in the second heating mode, as in the fourth heating mode, the first electromagnetic regulating valve 28 is closed, the second electromagnetic regulating valve 29 is opened, and the fourth three-way valve 45 is set to the first communication state. As a result, in the second heating mode, heat is absorbed from the outside air by the low temperature radiator 32, and in some cases, the heat exchangers of the heat generating devices absorb the heat from the heat generating devices, and the heat is released by the heater core 43.

After that, when the temperature of the coolant flowing through the engine heat exchanger 52 rises and becomes equal to or higher than the second reference temperature, the distribution state of the heat medium of the in-vehicle temperature control system 1 is set to the first distribution state (first heating mode) shown in FIG. 9. Here, since heat is discharged from the internal combustion engine 110 after the warm-up of the internal combustion engine 110 is completed, it is more efficient to use the heat discharged from the internal combustion engine 110 for heating rather than using heat generated by driving the refrigeration circuit 2. Therefore, in the present embodiment, after the temperature of the coolant flowing through the engine heat exchanger 52 becomes equal to or higher than the second reference temperature, the in-vehicle temperature control system 1 is operated in the first heating mode shown in FIG. 9. The second reference temperature is, for example, a temperature at which heating can be continued even when the coolant at the second reference temperature flows into the heater core 43, a temperature higher than the first reference temperature, and is specifically, for example, 60°C.

The distribution state of the heat medium shown in FIG. 12 is an example of the second heating mode. Thus, the distribution state may be different from the distribution state shown in FIG. 12 as long as the coolant heated in the condenser 22 flows through the heater core 43 and the coolant circulates by passing through the core bypass flow path 4f. For example, in the second heating mode, the coolant need not be circulated in some of the heat exchangers of the heat generating devices in the low temperature circuit 3. Further, when heating and dehumidifying of the vehicle cabin is requested, the refrigerant may flow through the evaporator 26 in the refrigeration circuit 2.

### Time Chart

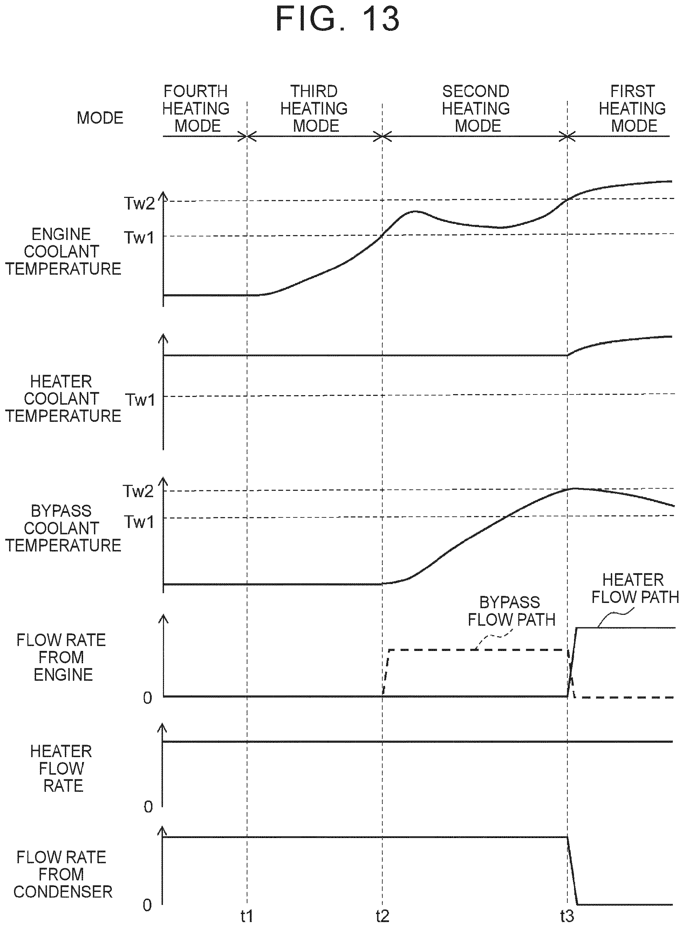

FIG. 13 is a time chart showing changes in various parameters when the internal combustion engine 110 is cold-started in a state where heating of the vehicle cabin is requested. The engine coolant temperature, the heater coolant temperature, and the bypass coolant temperature in FIG. 13 each indicate the temperature of the coolant circulating in the engine cooling circuit 5, the temperature of the coolant flowing through the heater core 43, and the temperature of the coolant flowing through the core bypass flow path 4f. The flow rate from the engine, the heater flow rate, and the flow rate from the condenser in FIG. 13 each indicate the flow rate of the coolant flowing out from the engine cooling circuit 5 through the engine outflow flow path 4e, the flow rate of the coolant flowing through the heater core 43, and the flow rate of the coolant flowing out from the condenser 22. In particular, the dashed line in the flow rate from the engine indicates the flow rate of the coolant flowing from the engine cooling circuit 5 into the core bypass flow path 4f, and the solid line indicates the flow rate of the coolant flowing from the engine cooling circuit 5 into the heater flow path 4c.

In the example shown in FIG. 13, the in-vehicle temperature control system 1 is operated in the fourth heating mode (FIG. 10) before the cold start of the internal combustion engine 110 is started at time t1. Therefore, before time t1, the coolant circulates between the condenser 22 and the heater core 43, so that the flow rate of the coolant flowing through the heater core 43 and the flow rate of the coolant flowing out from the condenser 22 are equal. Further, since the coolant heated by the condenser 22 flows into the heater core 43, the coolant having a relatively high temperature flows through the heater core 43.

In the example shown in FIG. 13, at time t1, the internal combustion engine 110 is cold-started and the distribution state of the heat medium in the in-vehicle temperature control system 1 is switched to the third heating mode (FIG. 11). As a result, the temperature of the coolant circulating in the engine cooling circuit 5 gradually rises. On the other hand, since the coolant heated by the condenser 22 flows into the heater core 43, the coolant having a relatively high temperature flows through the heater core 43.

After that, when the temperature of the coolant circulating in the engine cooling circuit 5 reaches the first reference temperature Tw1 at time t2, the distribution state of the heat medium in the in-vehicle temperature control system 1 is switched to the second heating mode (FIG. 12). Therefore, at time t2 and after, a part of the coolant in the engine cooling circuit 5 flows through the engine outflow flow path 4e, the core bypass flow path 4f, and the engine inflow flow path 4d. Therefore, the flow rate of the coolant flowing into the core bypass flow path 4f increases, and the temperature of the coolant flowing through the core bypass flow path 4f gradually rises. On the other hand, since the coolant staying in the engine outflow flow path 4e, the core bypass flow path 4f, and the engine inflow flow path 4d flows into the engine cooling circuit 5, the temperature of the coolant in the engine cooling circuit 5 temporarily decreases. However, when the temperature of the coolant flowing through the core bypass flow path 4f gradually rises, the temperature of the coolant in the engine cooling circuit 5 also rises again after the decrease. On the other hand, since the coolant heated by the condenser 22 flows into the heater core 43, the coolant having a relatively high temperature flows through the heater core 43.

When the temperature of the coolant circulating in the engine cooling circuit 5 reaches the second reference temperature Tw2 at time t3, the distribution state of the heat medium in the in-vehicle temperature control system 1 is switched to the first heating mode (FIG. 9). Therefore, at time t3 and after, a part of the coolant in the engine cooling circuit 5 flows through the heater flow path 4c, and the coolant does not flow from the condenser 22 to the heater core 43. However, since the temperature of the coolant in the engine cooling circuit 5 is already relatively high, the coolant having a relatively high temperature continues to flow into the heater core 43. On the other hand, since the flow of the coolant in the core bypass flow path 4f is stopped, the temperature of the coolant in the core bypass flow path 4f gradually decreases at time t3 and after.

As described above, according to the in-vehicle temperature control system 1 of the present embodiment, when the internal combustion engine 110 is cold-started in a state where heating of the vehicle is requested, the coolant having a relatively high temperature always flows into the heater core 43.

### Flowchart

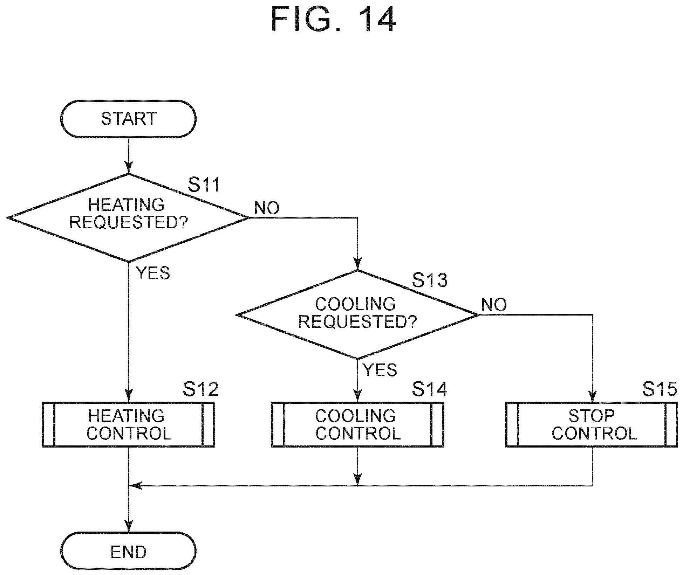

FIG. 14 is a flowchart of a control routine that controls the distribution state of the heat medium in the in-vehicle temperature control system 1. The illustrated control routine is executed at regular time intervals.

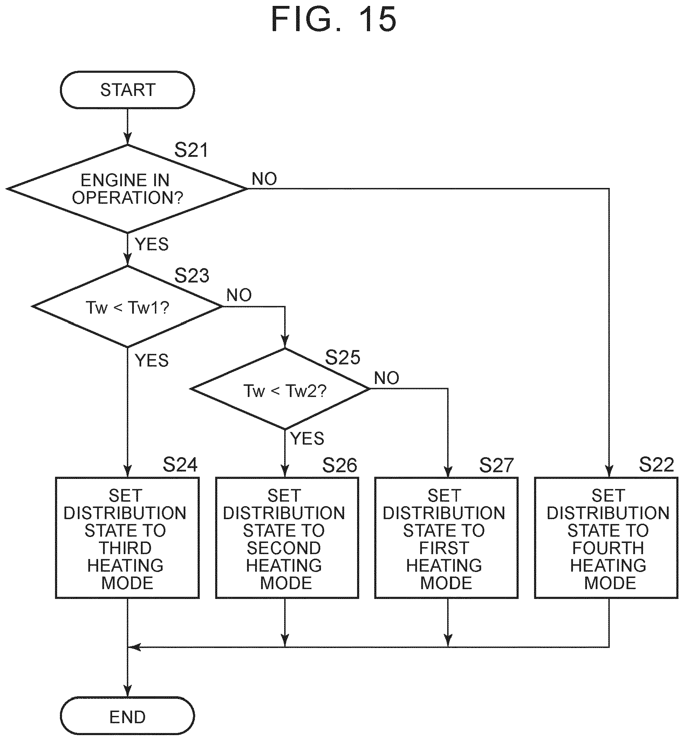

First, in step S11, the ECU 61 determines whether heating is requested. When it is determined in step S11 that heating is requested, the control routine proceeds to step S12. In step S12, the heating control shown in FIG. 15 is executed.

On the other hand, when it is determined in step S11 that heating is not requested, the control routine proceeds to step S13. In step S13, the ECU 61 determines whether cooling is requested. When it is determined in step S13 that cooling is requested, the control routine proceeds to step S14. In step S14, cooling control is executed. In the cooling control, for example, the distribution state of the heat medium in the in-vehicle temperature control system 1 is set to either the first cooling mode or the second cooling mode depending on whether rapid cooling of the heat generating devices is required.

When it is determined in step S13 that cooling is not requested, the control routine proceeds to step S15. In step S15, stop control is executed. In the stop control, for example, the distribution state of the heat medium in the in-vehicle temperature control system 1 is set to either the first stop mode or the second stop mode depending on whether rapid cooling of the heat generating devices is required.

FIG. 15 is a flowchart showing a control routine for the heating control executed in step S12 of FIG. 14. The control routine in FIG. 15 is executed each time the control routine in FIG. 14 reaches step S12.

First, in step S21, the ECU 61 determines whether the internal combustion engine 110 is in operation. Whether the internal combustion engine 110 is in operation is determined based on, for example, the output of a sensor or the like indicating the rotation speed of the internal combustion engine 110. When it is determined in step S21 that the internal combustion engine 110 is not in operation, the control routine proceeds to step S22. In step S22, the ECU 61 sets the distribution state of the heat medium in the in-vehicle temperature control system 1 to the fourth heating mode (FIG. 10).

On the other hand, when it is determined in step S21 that the internal combustion engine 110 is in operation, the control routine proceeds to step S23. In step S23, the ECU 61 determines whether the temperature Tw of the coolant in the engine cooling circuit 5 detected by the first water temperature sensor 62 is lower than the first reference temperature Tw1. When it is determined in step S23 that the temperature Tw of the coolant in the engine cooling circuit 5 is lower than the first reference temperature Tw1, the control routine proceeds to step S24. In step S24, the ECU 61 sets the distribution state of the heat medium in the in-vehicle temperature control system 1 to the third heating mode (FIG. 11).

On the other hand, when it is determined in step S23 that the temperature Tw of the coolant in the engine cooling circuit 5 is equal to or higher than the first reference temperature Tw1, the control routine proceeds to step S25. In step S25, the ECU 61 determines whether the temperature Tw of the coolant in the engine cooling circuit 5 detected by the first water temperature sensor 62 is lower than the second reference temperature Tw2. In step S25, the ECU 61 may determine whether the temperature of the coolant detected by the second water temperature sensor 63 is lower than the second reference temperature Tw2.

When it is determined in step S25 that the temperature Tw of the coolant in the engine cooling circuit 5 is lower than the second reference temperature Tw2, the control routine proceeds to step S26. In step S26, the ECU 61 sets the distribution state of the heat medium in the in-vehicle temperature control system 1 to the second heating mode (FIG. 12).

On the other hand, when it is determined in step S25 that the temperature Tw of the coolant in the engine cooling circuit 5 is equal to or higher than the second reference temperature Tw2, the control routine proceeds to step S27. In step S27, the ECU 61 sets the distribution state of the heat medium in the in-vehicle temperature control system 1 to the first heating mode (FIG. 9).

### Effects

In the in-vehicle temperature control system 1 of the present embodiment, the engine inflow flow path 4d and the engine outflow flow path 4e extend between the front and rear of the vehicle cabin. Further, when the internal combustion engine 110 is cold-started, the coolant is first circulated in the engine cooling circuit 5 to raise the temperature of the coolant in the engine cooling circuit 5 to a certain temperature. Therefore, even when the temperature of the coolant in the engine cooling circuit 5 rises to some extent, the temperature of the coolant in the engine inflow flow path 4d and the engine outflow flow path 4e may remain low.

When the coolant is flowed from the engine cooling circuit 5 to the heater core 43 in such a state, the low temperature coolant staying in the engine inflow flow path 4d and the engine outflow flow path 4e flows into the heater core 43. Therefore, for example, when the temperature of the coolant flowing into the heater core 43 is raised in advance using the condenser 22 of the refrigeration circuit 2, the temperature of the coolant flowing through the heater core 43 temporarily decreases. As a result, the heating capacity of the heater core 43 temporarily decreases.

In view of this, in the in-vehicle temperature control system 1 according to the present embodiment, the distribution state of the heat medium is set to the second heating mode (FIG. 12) and then to the first heating mode (FIG. 9). That is, the coolant in the engine cooling circuit 5 flows through the core bypass flow path 4f provided adjacent to the heater flow path 4c before flowing through the heater flow path 4c. As a result, the coolant in the engine inflow flow path 4d and the engine outflow flow path 4e is sufficiently heated before the coolant in the engine cooling circuit 5 flows into the heater core 43. Therefore, according to the in-vehicle temperature control system 1 of the present embodiment, when the internal combustion engine 110 is cold-started in a state where heating of the vehicle cabin is requested, the coolant having a relatively high temperature always flows into the heater core 43 as shown in FIG. 13. Therefore, it is possible to suppress the temperature of the coolant flowing through the heater core 43 from temporarily decreasing.

### Modification

In the above description, the case where the internal combustion engine 110 is cold-started in a state where heating of the vehicle cabin is requested is described as an example. However, even when heating of the vehicle cabin is requested for the first time after the warm-up of the internal combustion engine 110 is completed, the temperature of the coolant in the engine inflow flow path 4d and the engine outflow flow path 4e may remain low. Thus, even in such a case, the distribution state of the heat medium may be set in the order of the second heating mode and the first heating mode as described above. To summarize the above, when heating of the vehicle cabin is requested while the temperature of the coolant of the engine inflow flow path 4d and the engine outflow flow path 4e is lower than the temperature required for heating, the distribution state of the heat medium is set in the order of the second heating mode and the first heating mode.

Further, in the above embodiment, the engine heat exchanger 52 and the engine cooling circuit 5 are disposed in the rear portion of the vehicle 100, and the condenser 22, the heater core 43, and the core bypass flow path 4f are disposed in the front portion of the vehicle 100. However, the engine heat exchanger 52 and the engine cooling circuit 5 may be disposed in the front portion of the vehicle 100, and the condenser 22, the heater core 43, and the core bypass flow path 4f may be disposed in the rear portion of the vehicle 100. Therefore, the engine heat exchanger 52 is disposed on the first side of the vehicle cabin in the front-rear direction of the vehicle 100, and the condenser 22, the heater core 43, and the core bypass flow path 4f are disposed on the second side that is opposite to the first side of the vehicle cabin in the front-rear direction of the vehicle 100.

In the above embodiment, the condenser 22 is provided as the second heating unit that heats the coolant of the high temperature circuit 4 using heat other than the exhaust heat of the internal combustion engine 110. However, a heating means other than the condenser 22 may be provided as the second heating unit. Specifically, the second heating unit may be, for example, an electric heater.

In addition, the high temperature circuit 4 may have a configuration different from the configuration in the above embodiment. However, even in that case, the high temperature circuit 4 needs to be provided with a core bypass flow path 4f disposed in parallel with the heater core 43 with respect to the engine heat exchanger 52, and needs to be configured so that the distribution state of the heat medium can be switched between the first distribution state and the second distribution state by the distribution state switching mechanism. In addition, in the first distribution state, the heat medium heated by the engine heat exchanger 52 flows through the heater core 43 without passing through the core bypass flow path 4f, and in the second distribution state, the heat medium heated by the engine heat exchanger 52 flows through the core bypass flow path 4f without passing through the heater core 43.

Although a preferred embodiment of the present invention has been described above, the present invention is not limited to the embodiment, and various modifications can be made within the scope of the claims.

## Claims

1. An in-vehicle temperature control system (1) comprising:
a heater core (43) used to heat an inside of a vehicle cabin using heat of a heat medium;
a first heating unit (52) that is configured to heat the heat medium using exhaust heat of an internal combustion engine (110) comprising an engine cooling circuit (5);
a thermal circuit (4) configured to circulate the heat medium between the heater core (43) and the first heating unit (52), and including
a core bypass flow path (4f) disposed in parallel with the heater core (43) with respect to the first heating unit (52); and
the engine cooling circuit (5) configured to allow at least a part of the heat medium flowing out from the first heating unit (52) to flow into the first heating unit (52) again without flowing through the heater core (43) nor the core bypass flow path (4f); wherein
the engine cooling circuit (5) is disposed on the first side of the vehicle cabin of the vehicle (100);
a distribution state switching mechanism (44, 45) that is configured to switch a distribution state of the heat medium between a first distribution state, a second distribution state, and a third distribution state;
a second heating unit (22) that is configured to heat the heat medium using heat other than the exhaust heat of the internal combustion engine (110), and
a control device (6) that controls the distribution state switching mechanism (44, 45), wherein
in the first distribution state, the heat medium heated by the first heating unit (52) flows through the heater core (43) without passing through the core bypass flow path (4f);
in the second distribution state, the heat medium heated by the first heating unit (52) flows through the core bypass flow path (4f) without passing through the heater core (43); but the heat medium heated by the second heating unit (22) flows through the heater core (43); and
in the third distribution state,
the heat medium does not flow from the first heating unit (52) into the heater core (43) nor the core bypass flow path (4f), but the heat medium heated by the second heating unit (22) flows through the heater core (43); and
the heat medium heated by the first heating unit (52) circulates only in the engine cooling circuit (5); and
the first heating unit (52), when mounted in a vehicle (100), is disposed on a first side of the vehicle cabin in a front-rear direction of a vehicle (100),
the heater core (43) and the core bypass flow path (4f) are disposed on a second side that is opposite to the first side of the vehicle cabin in the front-rear direction of the vehicle (100), and
the second heating unit (22) is disposed on the second side of the vehicle cabin, wherein
the control device (6) is configured to control the distribution state switching mechanism (44, 45) so as to switch a distribution state of the heat medium in an order of the third distribution state, the second distribution state and the first distribution state when heating of the vehicle cabin is requested, wherein
switching from the third distribution state to the second distribution state is performed when a temperature of the heat medium circulating in the engine cooling circuit (5) reaches a first reference temperature (Tw1); and
switching from the second distribution state to the first distribution state is performed when a temperature of the heat medium in the core bypass flow path (4f) reaches a second reference temperature (Tw2).

2. The in-vehicle temperature control system (1) according to claim 1, wherein
the first side of the vehicle cabin is further rearward of the vehicle cabin, and the second side of the vehicle cabin is further frontward of the vehicle cabin.

3. The in-vehicle temperature control system (1) according to claim 1 or 2, further comprising
a refrigeration circuit (2), wherein the second heating unit heats the heat medium using heat of a condenser (22) of the refrigeration circuit (2).

4. The in-vehicle temperature control system (1) according to claim 1 or 2, wherein:
the thermal circuit (4) includes a first thermal circuit and a second thermal circuit;
the first thermal circuit allows the heat medium to circulate between the first heating unit (52) and the heater core (43);
the second thermal circuit allows the heat medium to circulate between the second heating unit and the heater core (43); and
the first thermal circuit includes the core bypass flow path (4f).

5. The in-vehicle temperature control system (1) according to claim 4, wherein:
the second thermal circuit includes a radiator (42) provided in parallel with the heater core (43) with respect to the second heating unit; and
the second thermal circuit is configured to adjust a flow rate of the heat medium flowing through the heater core (43) and the radiator (42).

## Patentansprüche

1. Fahrzeuginternes Temperaturregelsystem (1), umfassend:
einen Heizkern (43), der dazu dient, das Innere eines Fahrzeuginsassenraums unter Verwendung von Wärme eines Wärmemediums zu heizen;
eine erste Heizeinheit (52), die das Wärmemedium unter Verwendung der Abgaswärme einer Brennkraftmaschine (110) erwärmt, die einen Maschinenkühlkreislauf (5) umfasst;
einen Wärmekreislauf (4), der so konfiguriert ist, dass er das Wärmemedium zwischen dem Heizkern (43) und der ersten Heizeinheit (52) zirkulieren lässt; und der umfasst
einen Kernumgehungsströmungsweg (4f), der in Bezug auf die erste Heizeinheit (52) parallel zum Heizungskern (43) angeordnet ist; und
den Maschinenkühlkreislauf (5), der so konfiguriert ist, dass er es zumindest einem Teil des aus der ersten Heizeinheit (52) ausströmenden Wärmemediums ermöglicht, wieder in die erste Heizeinheit (52) zu strömen, ohne durch den Heizungskern (43) oder den Kernumgehungsströmungsweg (4f) zu strömen; wobei
der Maschinenkühlkreislauf (5) auf der ersten Seite des Fahrzeuginnenraums des Fahrzeugs (100) angeordnet ist;
einen Verteilungszustands-Umschaltmechanismus (44, 45), der konfiguriert ist, einen Verteilungszustand des Wärmemediums zwischen einem ersten Verteilungszustand, einem zweiten Verteilungszustand und einem dritten Verteilungszustand umzuschalten;
eine zweite Heizeinheit (22), die konfiguriert ist, das Wärmemedium unter Verwendung einer anderen Wärme als der Abgaswärme der Brennkraftmaschine (110) zu erwärmen, und
eine Steuervorrichtung (6), die den Verteilungszustands-Umschaltmechanismus (44, 45) steuert, wobei
in dem ersten Verteilungszustand das von der ersten Heizeinheit (52) erwärmte Wärmemedium durch den Heizungskern (43) strömt, ohne durch den Kernumgehungsströmungsweg (4f) zu gehen;
in dem zweiten Verteilungszustand das von der ersten Heizeinheit (52) erwärmte Wärmemedium durch den Kernumgehungsströmungsweg (4f) strömt, ohne durch den Heizungskern (43) zu gehen; das von der zweiten Heizeinheit (22) erwärmte Wärmemedium jedoch durch den Heizungskern (43) strömt; und
im dritten Verteilungszustand,
das Wärmemedium weder von der ersten Heizeinheit (52) in den Heizungskern (43) noch in den Kernumgehungsströmungsweg (4f) fließt, aber das von der zweiten Heizeinheit (22) erwärmte Wärmemedium durch den Heizungskern (43) fließt; und
das von der ersten Heizeinheit (52) erwärmte Wärmemedium nur im Maschinenkühlkreislauf (5) zirkuliert; und
die erste Heizeinheit (52), wenn sie in einem Fahrzeug (100) montiert ist, auf einer ersten Seite des Fahrzeuginsassenraums in einer Vorwärts-Rückwärts-Richtung eines Fahrzeugs (100) angeordnet ist,
der Heizkern (43) und der Kernumgehungsströmungspfad (4f) an einer zweiten Seite angeordnet sind, die der ersten Seite der Fahrzeugkabine in der Vorwärts-Rückwärts-Richtung des Fahrzeugs (100) gegenüberliegt, und
die zweite Heizeinheit (22) auf der zweiten Seite des Fahrzeuginsassenraums angeordnet ist, wobei
die Steuervorrichtung (6) konfiguriert ist, den Verteilungszustands-Umschaltmechanismus (44, 45) so zu steuern, dass ein Verteilungszustand des Wärmemediums in einer Reihenfolge des dritten Verteilungszustands, des zweiten Verteilungszustands und des ersten Verteilungszustands umgeschaltet wird, wenn eine Beheizung des Fahrzeuginsassenraums angefordert wird, wobei
das Umschalten vom dritten Verteilungszustand zu dem zweiten Verteilungszustand durchgeführt wird, wenn eine Temperatur des im Maschinenkühlkreislauf (5) zirkulierenden Wärmemediums eine erste Referenztemperatur (Tw1) erreicht; und
das Umschalten vom zweiten Verteilungszustand zu dem ersten Verteilungszustand erfolgt, wenn eine Temperatur des Wärmemediums im Kernumgehungsströmungspfad (4f) eine zweite Referenztemperatur (Tw2) erreicht.

2. Fahrzeuginternes Temperaturregelsystem (1) nach Anspruch 1, wobei
die erste Seite des Fahrzeuginsassenraums sich weiter hinten in dem Fahrzeuginsassenraum befindet und die zweite Seite des Fahrzeuginsassenraums sich weiter vorne in dem Fahrzeuginsassenraum befindet.

3. Fahrzeuginternes Temperaturregelsystem (1) nach Anspruch 1 oder 2, das ferner Folgendes umfasst
einen Kühlkreislauf (2), wobei die zweite Heizeinheit das Wärmemedium unter Verwendung der Wärme eines Kondensators (22) des Kühlkreislaufs (2) erwärmt.

4. Fahrzeuginternes Temperaturregelsystem (1) nach Anspruch 1 oder 2, wobei:
der Wärmekreislauf (4) einen ersten Wärmekreislauf und einen zweiten Wärmekreislauf umfasst;
der erste Wärmekreislauf die Zirkulation des Wärmemediums zwischen der ersten Heizeinheit (52) und dem Heizungskern (43) ermöglicht;
der zweite Wärmekreislauf die Zirkulation des Wärmemediums zwischen der zweiten Heizeinheit und dem Heizungskern (43) ermöglicht; und
der erste Wärmekreislauf den Kernumgehungsströmungspfad (4f) hat.

5. Fahrzeuginternes Temperaturregelsystem (1) nach Anspruch 4, wobei:
der zweite Wärmekreislauf einen Kühler (42) hat, der in Bezug auf die zweite Heizeinheit parallel zum Heizkern (43) vorgesehen ist; und
der zweite Wärmekreislauf so konfiguriert ist, dass er eine Durchflussrate des durch den Heizungskern (43) und den Kühler (42) fließenden Wärmemediums einstellt.

## Revendications

1. Système de commande de température à l'intérieur d'un véhicule (1) comprenant :
un radiateur de chauffage (43) utilisé pour chauffer un intérieur d'un habitacle de véhicule à l'aide de chaleur d'un milieu thermique ;
une première unité de chauffage (52) qui est configurée pour chauffer le milieu thermique à l'aide de chaleur d'échappement d'un moteur à combustion interne (110) comprenant un circuit de refroidissement de moteur (5) ;
un circuit thermique (4) configuré pour faire circuler le milieu thermique entre le radiateur de chauffage (43) et la première unité de chauffage (52), et incluant
un trajet d'écoulement de dérivation de radiateur (4f) disposé en parallèle avec le radiateur de chauffage (43) par rapport à la première unité de chauffage (52) ; et
le circuit de refroidissement de moteur (5) configuré pour permettre à au moins une partie du milieu thermique s'écoulant hors de la première unité de chauffage (52) de s'écouler à nouveau dans la première unité de chauffage (52) sans s'écouler à travers le radiateur de chauffage (43) ni le trajet d'écoulement de dérivation de radiateur (4f) ; dans lequel
le circuit de refroidissement de moteur (5) est disposé sur le premier côté de l'habitacle de véhicule du véhicule (100) ;
un mécanisme de commutation d'état de distribution (44, 45) qui est configuré pour commuter un état de distribution du milieu thermique entre un premier état de distribution, un second état de distribution, et un troisième état de distribution ;
une seconde unité de chauffage (22) qui est configurée pour chauffer le milieu thermique à l'aide de chaleur autre que la chaleur d'échappement du moteur à combustion interne (110), et
un dispositif de commande (6) qui commande le mécanisme de commutation d'état de distribution (44, 45), dans lequel
dans le premier état de distribution, le milieu thermique chauffé par la première unité de chauffage (52) s'écoule à travers le radiateur de chauffage (43) sans traverser le trajet d'écoulement de dérivation de radiateur (4f) ;
dans le second état de distribution, le milieu thermique chauffé par la première unité de chauffage (52) s'écoule à travers le trajet d'écoulement de dérivation de radiateur (4f) sans traverser le radiateur de chauffage (43) ; mais le milieu thermique chauffé par la seconde unité de chauffage (22) s'écoule à travers le radiateur de chauffage (43) ; et
dans le troisième état de distribution, le milieu thermique ne s'écoule pas de la première unité de chauffage (52) vers le radiateur de chauffage (43) ni le trajet d'écoulement de dérivation de radiateur (4f), mais le milieu thermique chauffé par la seconde unité de chauffage (22) s'écoule à travers le radiateur de chauffage (43) ; et
le milieu thermique chauffé par la première unité de chauffage (52) circule uniquement dans le circuit de refroidissement de moteur (5) ; et
la première unité de chauffage (52), lorsqu'elle est montée dans un véhicule (100), est disposée sur un premier côté de l'habitacle de véhicule dans une direction avant-arrière d'un véhicule (100),
le radiateur de chauffage (43) et le trajet d'écoulement de dérivation de radiateur (4f) sont disposés sur un second côté qui est opposé au premier côté de l'habitacle de véhicule dans la direction avant-arrière du véhicule (100), et
la seconde unité de chauffage (22) est disposée sur le second côté de l'habitacle de véhicule, dans lequel
le dispositif de commande (6) est configuré pour commander le mécanisme de commutation d'état de distribution (44, 45) de manière à commuter un état de distribution du milieu thermique dans un ordre du troisième état de distribution, du second état de distribution et du premier état de distribution lorsque le chauffage de l'habitacle de véhicule est requis, dans lequel
la commutation du troisième état de distribution au second état de distribution est réalisée lorsqu'une température du milieu thermique circulant dans le circuit de refroidissement de moteur (5) atteint une première température de référence (Tw1) ; et
la commutation du second état de distribution au premier état de distribution est réalisée lorsqu'une température du milieu thermique dans le trajet d'écoulement de dérivation de radiateur (4f) atteint une seconde température de référence (Tw2).

2. Système de commande de température à l'intérieur d'un véhicule (1) selon la revendication 1, dans lequel
le premier côté de l'habitacle de véhicule est en outre à l'arrière de l'habitacle de véhicule, et le second côté de l'habitacle de véhicule est en outre à l'avant de l'habitacle de véhicule.

3. Système de commande de température à l'intérieur d'un véhicule (1) selon la revendication 1 ou 2, comprenant en outre
un circuit de réfrigération (2), dans lequel la seconde unité de chauffage chauffe le milieu thermique à l'aide de chaleur d'un condenseur (22) du circuit de réfrigération (2).

4. Système de commande de température à l'intérieur d'un véhicule (1) selon la revendication 1 ou 2, dans lequel :
le circuit thermique (4) inclut un premier circuit thermique et un second circuit thermique ;
le premier circuit thermique permet au milieu thermique de circuler entre la première unité de chauffage (52) et le radiateur de chauffage (43) ;
le second circuit thermique permet au milieu thermique de circuler entre la seconde unité de chauffage et le radiateur de chauffage (43) ; et
le premier circuit thermique inclut le trajet d'écoulement de dérivation de radiateur (4f).

5. Système de commande de température à l'intérieur d'un véhicule (1) selon la revendication 4, dans lequel :
le second circuit thermique inclut un radiateur (42) fourni en parallèle avec le radiateur de chauffage (43) par rapport à la seconde unité de chauffage ; et
le second circuit thermique est configuré pour régler un débit du milieu thermique s'écoulant à travers le radiateur de chauffage (43) et le radiateur (42).
